# EUROPEAN PATENT SPECIFICATION

(11) **EP 4 642 074 B1**
(45) Date of publication and mention of the grant of the patent: **30.09.2026**
(21) Application number: 24741147.3
(22) Date of filing: 04.01.2024
(51) Int. Cl.: H04W 12/084, H04W 12/069, H04L 9/32, H04L 9/40

(54) **COMMUNICATION METHOD, COMMUNICATION APPARATUS, AND COMMUNICATION SYSTEM**
KOMMUNIKATIONSVERFAHREN, KOMMUNIKATIONSVORRICHTUNG UND KOMMUNIKATIONSSYSTEM
PROCÉDÉ DE COMMUNICATION, APPAREIL DE COMMUNICATION ET SYSTÈME DE COMMUNICATION

(30) Priority: 10.01.2023 CN 202310035016
(43) Date of publication of application: 29.10.2025
(73) Proprietor: Huawei Technologies Co., Ltd., Shenzhen, Guangdong 518129 (CN)
(72) Inventor: GUO, Tao, Shenzhen, Guangdong 518129 (CN); WU, Yizhuang, Shenzhen, Guangdong 518129 (CN); LIU, Wenfeng, Shenzhen, Guangdong 518129 (CN)
(74) Representative: Goddar, Heinz J.
(86) International application number: PCT/CN2024/070608
(87) International publication number: WO 2024/149148

(56) References cited:
- WO-A1-2021/165925
- WO-A1-2022/191932
- WO-A1-2023/247394
- CN-A- 114 339 821
- CN-A- 116 193 441
- US-A1- 2022 272 537
- MIRKO CANO SOVERI ET AL: "Draft TR 33.738", vol. SA WG3, no. Toulouse, FR; 20221114 - 20221118, 23 November 2022 (2022-11-23), XP052228904, Retrieved from the Internet <URL:https://www.3gpp.org/ftp/TSG_SA/WG3_Security/TSGS3_109/Docs/S3-224178.zip S3-224178 TR33.738 0.4.0-cl.docx> [retrieved on 20221123]
- AO LEI, HUAWEI, HISILICON: "New solution on authorization for AI/ML model sharing", 3GPP DRAFT; S3-230956; TYPE PCR; FS_ENA_SEC_PH3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. 3GPP SA 3, no. Athens, GR; 20230220 - 20230224, 13 February 2023 (2023-02-13), Mobile Competence Centre ; 650, route des Lucioles ; F-06921 Sophia-Antipolis Cedex ; France, XP052237407

## Description

This application claims priority to Chinese Patent Application No. 202310035016.5, filed with the China National Intellectual Property Administration on January 10, 2023 and entitled "COMMUNICATION METHOD, COMMUNICATION APPARATUS, AND COMMUNICATION SYSTEM".

### TECHNICAL FIELD

This application relates to the communication field, and more specifically, to a communication method, a communication apparatus, and a communication system.

### BACKGROUND

In the communication field, a machine learning (Machine Learning, ML) model may be combined with an NWDAF (Network Data Analytics Function, network data analytics function) to perform a prediction service in different scenarios. Based on exclusiveness and sensitivity of an AI/ML model, when an NWDAF including a model analytics logical function (Analytics logical function) serving as a network function service consumer (NF service consumer, NFc) accesses an ML model generated by an NWDAF including a model training logical function MTLF (Model Training logical function) serving as a network function service producer (NF service producer, NFp), the NFc can obtain the ML model only after being authorized by the NFp.

However, a manner of performing authorization based on a network repository function (Network Repository Function, NRF) in a current service-based architecture (SBA, Service-Based Architecture) is not applicable to a requirement of AI/ML model authorization. Therefore, additional steps are urgently needed to ensure security of model authorization and sharing.

### SUMMARY

This application provides a communication method, a communication apparatus, and a communication system, to ensure security of model authorization and sharing.

According to a first aspect, a communication method is provided. The method includes: A network repository function network element receives a first request message from a first network function, where the first request message is used to request to authorize the first network function to obtain a model. The network repository function network element sends a second request message to a model producer network element based on the first request message, where the second request message is used to request to determine whether to authorize the first network function to obtain the model. The network repository network element receives a second response message from the model producer network element, and generates a first access token based on the second response message, where the second response message indicates that the first network function is authorized to obtain the model, and the first access token indicates that the first network function is authorized to obtain the model. The network repository function network element sends a first response message to the first network function, where the first response message includes the first access token.

It should be understood that requesting to authorize the first network function to obtain the model is requesting to generate an access token for the first network function to obtain the model from the model storage network element, for example, an analytics data repository function (Analytics Data Repository Function, ADRF).

Based on the foregoing solution, after receiving an authorization request message of the first network function for obtaining the model, the network repository function network element requests authorization from the model producer network element of the model, and determines, based on an authorization response message of the model producer network element, whether to perform authorization. Further, the network repository function network element can issue the first access token to the first network function when the model producer network element agrees to authorize the first network function to obtain the model, to ensure security of model authorization and sharing.

With reference to the first aspect, in some implementations of the first aspect, the first request message includes an analytics identifier, and the analytics identifier indicates a type of the model. Before the network repository function network element sends the second request message to the model producer network element based on the first request message, the method further includes: The network repository function network element determines the model producer network element based on the analytics identifier and an analytics identifier that corresponds to at least one model producer network element and is stored in the network repository function network element.

Based on the foregoing solution, the network repository function network element determines, based on the analytics identifier carried in the request message and the locally stored analytics identifier corresponding to the model storage network element, and sends the authorization request to the model producer network element that can provide the type of the model requested by the first network function, to improve flexibility of the solution.

With reference to the first aspect, in some implementations of the first aspect, the first request message includes an analytics identifier, and the analytics identifier indicates a type of the model.

Based on the foregoing solution, the network repository function network element can obtain the type of the model requested by the first network function, to improve flexibility of the solution.

With reference to the first aspect, in some implementations of the first aspect, the network repository function network element determines the model producer network element based on the analytics identifier, the analytics identifier that corresponds to the at least one model producer network element and is stored in the network repository function network element, a vendor identifier of the first network function, and an interoperability identifier of the at least one model producer network element stored in the network repository function network element, where the interoperability identifier of the at least one model producer network element indicates a vendor of a network function that is allowed to obtain a model from the at least one model producer network element.

Based on the foregoing solution, the network repository function network element determines, based on the analytics identifier carried in the request message, the locally stored analytics identifier corresponding to the model storage network element, the vendor identifier of the first network function, and the locally stored interoperability identifier of the at least one model producer network element, and sends the authorization request to the model producer network element that can provide the type of the model requested by the first network function and that is allowed to provide a service for the first network function, to improve flexibility of the solution.

With reference to the first aspect, in some implementations of the first aspect, that the network repository function network element determines the model producer network element based on the analytics identifier, the analytics identifier that corresponds to the at least one model producer network element and is stored in the network repository function network element, the vendor identifier of the first network function, and the interoperability identifier of the at least one model producer network element stored in the network repository function network element includes: The network repository function network element determines at least two candidate model producer network elements based on the analytics identifier in the first request message and the analytics identifier corresponding to the at least one network producer network element. The network repository function network element determines the model producer network element from the at least two candidate model producer network elements based on the vendor identifier of the first network function and the interoperability identifier of the at least one model producer network element stored in the network repository function network element.

Based on the foregoing solution, when determining the at least two candidate model storage network elements based on the analytics identifier carried in the request message and the locally stored analytics identifier corresponding to the model storage network element, the network repository function network element can further determine, based on the vendor identifier of the first network function and the locally stored interoperability identifier of the at least one model producer network element from the candidate model storage network elements, and send the authorization request to the model producer network element that can provide the type of the model requested by the first network function and that is allowed to provide the service for the first network function, to improve flexibility of the solution.

With reference to the first aspect, in some implementations of the first aspect, the first request message further includes a first identifier, and the first identifier indicates a vendor of a model producer network element corresponding to a model that the first network function expects to obtain, or the first identifier indicates a type of a model producer network element corresponding to a model that the first network function expects to obtain; and that the network repository function network element determines the model producer network element based on the analytics identifier and the analytics identifier that corresponds to the at least one model producer network element and is stored in the network repository function network element includes: The network repository function network element determines the model producer network element based on the analytics identifier, the analytics identifier that corresponds to the at least one model producer network element and is stored in the network repository function network element, a vendor identifier of the first network function, an interoperability identifier of the at least one model producer network element stored in the network repository function network element, the first identifier, and a vendor identifier of the at least one model producer network element stored in the network repository function, where the interoperability identifier of the at least one model producer network element indicates a vendor of a network function that is allowed to obtain a model from the at least one model producer network element.

With reference to the first aspect, in some implementations of the first aspect, the first request message further includes a first identifier, and the first identifier indicates a vendor of a model producer network element corresponding to the first network function that supports interoperating the model; and that the network repository function network element determines the model producer network element based on the analytics identifier and the analytics identifier that corresponds to the at least one model producer network element and is stored in the network repository function network element includes: The network repository function network element determines the model producer network element based on the analytics identifier, the analytics identifier that corresponds to the at least one model producer network element and is stored in the network repository function network element, a vendor identifier of the first network function, an interoperability identifier of the at least one model producer network element stored in the network repository function network element, the first identifier, and a vendor identifier of the at least one model producer network element stored in the network repository function, where the interoperability identifier of the at least one model producer network element indicates a vendor of a network function that is allowed to obtain a model from the at least one model producer network element.

For example, the first identifier includes at least one vendor identifier, or the first identifier includes at least one vendor type.

Based on the foregoing solution, the network repository function network element determines, based on the analytics identifier carried in the request message, the locally stored analytics identifier corresponding to the model storage network element, the vendor identifier of the first network function, the locally stored interoperability identifier of the at least one model producer network element, the first identifier, and the vendor identifier of the at least one model producer network element stored in the network repository function, and sends the authorization request to the model producer network element that can provide the type of the model requested by the first network function and that is allowed to provide the service for the first network function, to improve flexibility of the solution.

With reference to the first aspect, in some implementations of the first aspect, the second request message includes the analytics identifier.

Based on the foregoing solution, after determining to send the request information to the model producer network element corresponding to the model, the network repository function network element includes the analytics identifier in the request information, so that the model producer network element can determine, based on the request information, whether to authorize the first network function to obtain the model, to ensure security of model authorization and sharing.

With reference to the first aspect, in some implementations of the first aspect, the second request message includes the vendor identifier of the first network function and/or an identifier of the first network function.

In other words, the second request message includes the first identifier and/or the identifier of the first network function.

Based on the foregoing solution, after determining to send the request information to the model producer network element corresponding to the model, the network repository function network element includes the vendor identifier of the first network function and/or the identifier of the first network function in the request information, so that the model producer network element can determine, based on the request information, whether to authorize the first network function to obtain the model, to ensure security of model authorization and sharing.

With reference to the first aspect, in some implementations of the first aspect, the second response message further includes identification information of the model.

It should be understood that the identification information of the model is one or more of an identifier of the model, an address of the model, and a hash value of the address of the model.

Based on the foregoing solution, the network repository function network element can authorize, at a model granularity based on the identification information of the model that is of the first network function and that is authorized by the model producer network element, the first network function to obtain the model, to further enhance security of model authorization and sharing.

With reference to the first aspect, in some implementations of the first aspect, the first access token includes the identification information of the model.

Based on the foregoing solution, the network repository function network element adds, to the first access token, the identification information that is of the model and that is returned by the model producer network element, to enhance security of model authorization and sharing.

With reference to the first aspect, in some implementations of the first aspect, the second response message further includes a second access token, the second access token indicates that the first network function is authorized to obtain the model, and the second access token includes the identifier of the first network function, an identifier of the model producer network element, and the analytics identifier and/or the identification information of the model.

Based on the foregoing solution, the network repository function network element can authorize, based on the second access token generated by the model producer network element, the first network function to obtain the model, to further enhance security of model authorization and sharing.

With reference to the first aspect, in some implementations of the first aspect, the first response message further includes the second access token.

Based on the foregoing solution, the network repository function network element sends the second access token generated by the model producer network element to the first network function, to explicitly authorize the first network function to obtain the model, to enhance security of model authorization and sharing.

With reference to the first aspect, in some implementations of the first aspect, the first access token includes the analytics identifier.

Based on the foregoing solution, the network repository function network element adds, to the first access token, authorization information returned by the model producer network element, to enhance security of model authorization and sharing.

Based on the foregoing solution, the network repository function network element adds, to the first access token, the identifier of the model producer network element that authorizes the first network function, to enhance security of model authorization and sharing.

With reference to the first aspect, in some implementations of the first aspect, the first access token includes a first identifier, and the first identifier indicates a vendor type of a model producer network element that the first network function is authorized to obtain.

Based on the foregoing solution, the network repository network element adds the first identifier to the first access token, to enhance security of model authorization and sharing.

With reference to the first aspect, in some implementations of the first aspect, the first access token includes the identifier of the model producer network element.

Based on the foregoing solution, the network repository function network element adds the identifier of the model producer network element to the first access token, to enhance security of model authorization and sharing.

According to a second aspect, a communication method is provided. The method includes: A model producer network element receives a request message from a network repository function network element, where the request message is used to request to determine whether to authorize a first network function to obtain a model. The model producer network element determines, based on the request message, to authorize the first network function to obtain the model. The model producer network element sends a response message to the network repository function network element, where the response message indicates that the first network function is authorized to obtain the model.

Based on the foregoing solution, the model producer network element can receive, from a model storage network element, a request message for obtaining a produced model by the first network function, to determine whether to authorize the first network function to obtain the model, and further ensure security of model authorization and sharing.

With reference to the second aspect, in some implementations of the second aspect, the request message includes an analytics identifier, a vendor identifier of the first network function, and an identifier of the first network function.

Based on the foregoing solution, the model producer network element determines, based on the analytics identifier, the vendor identifier of the first network function, and the identifier of the first network function that are carried in the request message, whether to authorize the first network function to obtain the model, to ensure security of model authorization and sharing.

With reference to the second aspect, in some implementations of the second aspect, that the model producer network element determines, based on the request message, to authorize the first network function to obtain the model includes: The model producer network element determines identification information of the model based on the analytics identifier. The model producer network element adds the identification information of the model to the response message.

Based on the foregoing solution, the model producer network element further authorizes, based on the analytics identifier, the identification information of the model of the first network function, and authorizes, at a model granularity, the first network function to obtain the model, to further enhance security of model authorization and sharing.

With reference to the second aspect, in some implementations of the second aspect, that the model producer network element determines, based on the request message, to authorize the first network function to obtain the model includes: The model producer network element generates a second access token, where the second access token indicates that the first network function is authorized to obtain the model, and the second access token includes the identifier of the first network function, an identifier of the model producer network element, and the analytics identifier and/or the identification information of the model. The model producer network element adds the second access token to the response message.

Based on the foregoing solution, the model producer network element issues the second access token to the first network function, to authorize the first network function to obtain the model, and further enhance security of model authorization and sharing.

According to a third aspect, a communication system is provided. The method includes a first network function, a network repository function network element, and a model producer network element. The network repository function network element is configured to receive a first request message from the first network function, where the first request message is used to request to authorize the first network function to obtain a model. The network repository function network element is further configured to send a second request message to the model producer network element based on the first request message, where the second request message is used to request to determine whether to authorize the first network function to obtain the model. The model producer network element is configured to receive the second request message from the network repository function network element. The model producer network element is further configured to determine, based on the second request message, to authorize the first network function to obtain the model. The model producer network element is further configured to send a second response message to the network repository function network element, where the second response message indicates that the first network function is authorized to obtain the model. The network repository function network element is further configured to receive the second response message from the model producer network element, and generate a first access token based on the second response message, where the first access token indicates that the first network function is authorized to obtain the model. The network repository function network element is further configured to send a first response message to the first network function, where the first response message includes the first access token.

Based on the foregoing solution, after receiving an authorization request message of the first network function for obtaining the model, the network repository function network element sends an authorization acknowledgment message to the model producer network element of the model. The model producer network element can determine, based on the authorization acknowledgment message, whether to authorize the first network function to obtain the model, and notify the network repository function, so that the network repository function can determine, based on an authorization response message of the model producer network element, whether to perform authorization. Further, the network repository function network element can issue the first access token to the first network function when the model producer network element agrees to authorize the first network function to obtain the model, to ensure security of model authorization and sharing.

With reference to the third aspect, in some implementations of the third aspect, the communication system further includes a model storage network element. The first network function is configured to send a third request message to the model storage network element, where the third request message is used to request to obtain the model, and the third request message includes the first access token. The first network function is configured to receive a third response message from the model storage network element, where the third response message includes a storage address of the model.

Based on the foregoing solution, the first network function can include the first access token generated by the network repository function based on the authorization of the model producer network element, and request to obtain the authorized model from the model storage network element, to ensure security of model authorization and sharing.

According to a fourth aspect, a communication method is provided. The method includes: A first network function sends a first request message to a model producer network element, where the first request message is used to request the model producer network element to authorize the first network function to obtain a first model, and the first model is generated by the model producer network element. The first network function receives a first access token from the model producer network element, where the first access token indicates that the first network function is authorized to obtain the first model. The first network function sends a second request message to a model storage network element, where the second request message is used to request to obtain the first model, and the second request message includes the first access token. The first network function receives a second response message from the model storage network element, where the second response message includes a storage address of the first model.

Based on the foregoing solution, the first network function can include the first access token generated by the model producer network element, and request to obtain the authorized model from the model storage network element, to ensure security of model authorization and sharing.

With reference to the fourth aspect, in some implementations of the fourth aspect, the first request message includes one or more of the following: a first analytics identifier, where the first analytics identifier indicates a type of the first model; an identifier of the model storage network element; and a vendor of a model producer network element corresponding to a model that the first network function expects to obtain.

Based on the foregoing solution, the first network function includes the foregoing information in the first request message, so that the model producer network element determines, based on the information in the first request message, specific authorization information for the first model that the first network function is authorized to obtain, to ensure security of model authorization and sharing.

With reference to the fourth aspect, in some implementations of the fourth aspect, the first access token includes one or more of the following: an identifier of the first network function; an identifier of the model producer network element; the first analytics identifier; and identification information of the model.

It should be understood that the identification information of the model is one or more of an identifier of the model, an address of the model, and a hash value of the address of the model.

Based on the foregoing solution, the model storage network element determines, based on content of the first access token, the first model that the first network function is authorized to obtain, to ensure security of model authorization and sharing.

With reference to the fourth aspect, in some implementations of the fourth aspect, the first access token includes a first identifier, the first identifier indicates an issuer of the first access token, the issuer of the first access token is the model producer network element or a network repository function, and the network repository function is configured to authenticate and authorize the first network function and the model producer network element.

Based on the foregoing solution, the first access token can be issued by the model producer network element, or the model producer network element requests the network repository function to issue the first access token, so that flexibility of the solution is improved on the premise of ensuring security of model authorization and sharing.

With reference to the fourth aspect, in some implementations of the fourth aspect, the first response message further includes a first ticket, and the first ticket is used to bind the address of the first model and the first network function. In addition, the method further includes: The first network function obtains the first model based on the storage address of the first model and the first ticket.

Based on the foregoing solution, the first ticket is used to restrict that only the first network function is allowed to obtain the first model from the storage address of the first model, to further improve security of model authorization and sharing.

With reference to the fourth aspect, in some implementations of the fourth aspect, the second request message further includes a second access token, and the second access token indicates that the first network function is authorized to access the model producer network element, the second token includes a vendor identifier of the model producer network element corresponding to the first model that the first network function is authorized to obtain.

Based on the foregoing solution, when accessing the model producer function, the first network function further needs to be authorized by the network repository function, and the second access token further includes the vendor identifier of the model producer network element corresponding to the first model that the first network function is authorized to obtain, so that the model producer network element can determine whether to fall within an authorization scope of the second access token, to ensure security of model authorization and sharing.

With reference to the fourth aspect, in some implementations of the fourth aspect, the method further includes: The first network function sends a third request message to the network repository function, where the third request message is used to request authorization for accessing a second network function. The first network function receives a third response message, where the third response message includes a third token, and the third token indicates that the first network function is authorized to access the second network function.

Based on the foregoing solution, when accessing the model storage function, the first network function further needs to be authorized by the network repository function, to ensure security of model authorization and sharing.

According to a fifth aspect, a communication method is provided. The method includes: A model storage network element receives a second request message from a first network function, where the second request message is used to request to obtain a first model, the second request message includes a first access token, and the first access token indicates that the first network function is authorized to obtain the first model. The model storage network element determines, based on the first access token, that the first network function is authorized to obtain the first model. The model storage network element sends a first response message, where the first response message includes a storage address of the first model.

Based on the foregoing solution, the model storage network element provides the storage address of the first model for the first network function based on the first access token, to ensure security of model authorization and sharing.

With reference to the fifth aspect, in some implementations of the fifth aspect, the first access token includes one or more of the following: an identifier of the first network function; an identifier of a model producer network element; a first analytics identifier; and identification information of the model.

It should be understood that the identification information of the model is one or more of an identifier of the model, an address of the model, and a hash value of the address of the model.

Based on the foregoing solution, the model storage network element determines, based on content of the first access token, the first model that the first network function is authorized to obtain, to ensure security of model authorization and sharing.

With reference to the fifth aspect, in some implementations of the fifth aspect, the first response message further includes a first ticket, and the first ticket is used to bind the address of the first model and the first network function. In addition, the method further includes: The first network function obtains the first model based on the storage address of the first model and the first ticket.

Based on the foregoing solution, the network repository function restricts, by using the first ticket, that only the first network function is allowed to obtain the first model from the storage address of the first model, to further improve security of model authorization and sharing.

According to a sixth aspect, a communication method is provided. The method includes: A model producer network element receives a first request message, where the first request message is used to request to authorize a first network function to obtain a first model. The model producer network element obtains a first access token based on the first request message, where the first access token indicates that the first network function is authorized to obtain the first model. The model producer network element sends a first response message, where the first response message includes the first access token.

Based on the foregoing solution, the model producer network element determines, based on the request message sent by the first network function, whether to authorize the first network function to obtain the first model. When determining to perform authorization, the model producer network element generates the first access token and sends the first access token to the first network function, so that the first network function can obtain the first model by using the first access token, to ensure security of model authorization and sharing.

With reference to the sixth aspect, in some implementations of the sixth aspect, the first request message includes one or more of the following: a first analytics identifier, where the first analytics identifier indicates a type of the first model; an identifier of a model storage network element; and a vendor of a model producer network element corresponding to a model that the first network function expects to obtain.

Based on the foregoing solution, the model producer network element determines, based on information in the first request message, specific authorization information for the first model that the first network function is authorized to obtain, to ensure security of model authorization and sharing.

With reference to the sixth aspect, in some implementations of the sixth aspect, that the model producer network element obtains the first access token based on the first request message includes: The model producer network element generates the first access token based on the first request message. Alternatively, the model producer network element sends a fourth request message to a network repository function, where the fourth request message is used to request the first access token. The model producer network element receives a fourth response message from the network repository function, where the fourth response message includes the first access token.

Based on the foregoing solution, the model producer network element generates the first access token based on the first request message, or requests the network repository function to generate the first access token, to improve flexibility of the solution.

With reference to the sixth aspect, in some implementations of the sixth aspect, the first access token includes one or more of the following: an identifier of the first network function; an identifier of the model producer network element; the first analytics identifier; and identification information of the model.

It should be understood that the identification information of the model is one or more of an identifier of the model, an address of the model, and a hash value of the address of the model.

Based on the foregoing solution, the model producer network element adds the foregoing information to the first access token, so that the model storage network element determines, based on content of the first access token, the first model that the first network function is authorized to obtain, to ensure security of model authorization and sharing.

According to a seventh aspect, an apparatus is provided, to implement the method according to the second aspect. The apparatus includes: a transceiver module, configured to receive a first request message from a first network function, where the first request message is used to request to authorize the first network function to obtain a model; and a processing module, configured to send a second request message to a model producer network element based on the first request message, where the second request message is used to request to determine whether to authorize the first network function to obtain the model. The transceiver module is further configured to receive a second response message from the model producer network element. The processing module is further configured to generate a first access token based on the second response message, where the second response message indicates that the first network function is authorized to obtain the model, and the first access token indicates that the first network function is authorized to obtain the model. The transceiver module is further configured to send a first response message to the first network function, where the first response message includes the first access token.

The apparatus may specifically perform the steps according to the first aspect. For example, the sending unit is configured to perform sending processing, and the processing unit is configured to perform processing other than receiving and sending processing. For various specific implementations of the apparatus, refer to the first aspect. Details are not described again.

According to an eighth aspect, an apparatus is provided. The apparatus includes: a transceiver module, configured to receive a request message from a network repository function network element, where the request message is used to request to determine whether to authorize a first network function to obtain a model; and a processing module, configured to determine, based on the request message, to authorize the first network function to obtain the model. The transceiver module is further configured to send a response message to the network repository function network element, where the response message indicates that the first network function is authorized to obtain the model.

The apparatus may specifically perform the steps according to the second aspect. For example, the sending unit is configured to perform sending processing, and the processing unit is configured to perform processing other than receiving and sending processing. For various specific implementations of the apparatus, refer to the second aspect. Details are not described again.

According to a ninth aspect, an apparatus is provided. The apparatus includes: a transceiver module, configured to send a first request message to a model producer network element, where the first request message is used to request the model producer network element to authorize a first network function to obtain a first model, and the first model is generated by the model producer network element, where the transceiver module is further configured to receive a first access token from the model producer network element, where the first access token indicates that the first network function is authorized to obtain the first model, and the transceiver module is further configured to send a second request message to a model storage network element, where the second request message is used to request to obtain the first model, and the second request message includes the first access token; and a processing module, configured to receive, by the first network function, a second response message from the model storage network element, where the second response message includes a storage address of the first model.

The apparatus may specifically perform the steps according to the fourth aspect. For example, the sending unit is configured to perform sending processing, and the processing unit is configured to perform processing other than receiving and sending processing. For various specific implementations of the apparatus, refer to the first aspect. Details are not described again.

According to a tenth aspect, an apparatus is provided. The apparatus includes: a transceiver module, configured to receive a second request message from a first network function, where the second request message is used to request to obtain a first model, the second request message includes a first access token, and the first access token indicates that the first network function is authorized to obtain the first model; and a processing module, configured to determine, based on the first access token, that the first network function is authorized to obtain the first model. The transceiver module is configured to send a first response message, where the first response message includes a storage address of the first model.

The apparatus may specifically perform the steps according to the fifth aspect. For example, the sending unit is configured to perform sending processing, and the processing unit is configured to perform processing other than receiving and sending processing. For various specific implementations of the apparatus, refer to the first aspect. Details are not described again.

According to an eleventh aspect, an apparatus is provided. The apparatus includes: a transceiver module, configured to receive a first request message, where the first request message is used to request to authorize a first network function to obtain a first model; and a processing module, configured to obtain a first access token based on the first request message, where the first access token indicates that the first network function is authorized to obtain the first model. The model producer network element sends a first response message, where the first response message includes the first access token.

The apparatus may specifically perform the steps according to the sixth aspect. For example, the sending unit is configured to perform sending processing, and the processing unit is configured to perform processing other than receiving and sending processing. For various specific implementations of the apparatus, refer to the first aspect. Details are not described again.

According to a twelfth aspect, a computer program product is provided. The computer program product includes a computer program (also referred to as code or instructions). When the computer program is run, a computer is enabled to perform the method according to any one of the first aspect to the twelfth aspect or the possible implementations of the first aspect to the twelfth aspect.

According to a thirteenth aspect, a computer-readable medium is provided. The computer-readable medium stores a computer program (also referred to as code or instructions). When the computer program is run on a computer, the computer is enabled to perform the method according to any one of the first aspect to the tenth aspect or the possible implementations of the first aspect to the tenth aspect.

According to a fourteenth aspect, a processing apparatus is provided, including a processor and a memory. The processor is configured to read instructions stored in the memory, receive a signal through a receiver, and transmit a signal through a transmitter, to perform the method according to any one of the first aspect to the thirteenth aspect or the possible implementations of the first aspect to the thirteenth aspect.

In a possible implementation, there are one or more processors, and there are one or more memories.

In a possible implementation, the memory may be integrated with the processor, or the memory and the processor may be separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

Optionally, a related data exchange process such as sending of indication information may be a process of outputting the indication information from the processor, and receiving of capability information may be a process of receiving the input capability information by the processor. Specifically, data output by the processor may be output to a transmitter, and input data received by the processor may be from a receiver. The transmitter and the receiver may be collectively referred to as a transceiver.

The processor according to the fourteenth aspect may be a chip. The processor may be implemented by using hardware or software. When the processor is implemented by using hardware, the processor may be a logic circuit, an integrated circuit, or the like; or when the processor is implemented by using software, the processor may be a general-purpose processor, and is implemented by reading software code stored in the memory. The memory may be integrated into the processor, or may exist independently outside the processor.

### BRIEF DESCRIPTION OF DRAWINGS

FIG. 1 is a diagram of a network architecture 100 to which embodiments of this application are applicable;
FIG. 2 is a schematic flowchart of a method 200 for obtaining an access token and an NF service;
FIG. 3A and FIG. 3B are a schematic flowchart of a model sharing method 300 according to an embodiment of this application;
FIG. 4 is a schematic flowchart of another model sharing method 400 according to an embodiment of this application;
FIG. 5A and FIG. 5B are a schematic flowchart of a communication method 500 according to an embodiment of this application;
FIG. 6 is a schematic flowchart of another communication method 600 according to an embodiment of this application;
FIG. 7 is a diagram of a communication apparatus 1000 according to an embodiment of this application;
FIG. 8 is a diagram of another communication apparatus 2000 according to an embodiment of this application; and
FIG. 9 is a diagram of a chip system 3000 according to an embodiment of this application.

### DESCRIPTION OF EMBODIMENTS

The following describes technical solutions of this application with reference to the accompanying drawings.

The technical solutions in embodiments of this application may be applied to various communication systems, for example, a 5G system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions in embodiments of this application may be further applicable to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

For ease of description, the 5G network is used as an example for description in embodiments of this application.

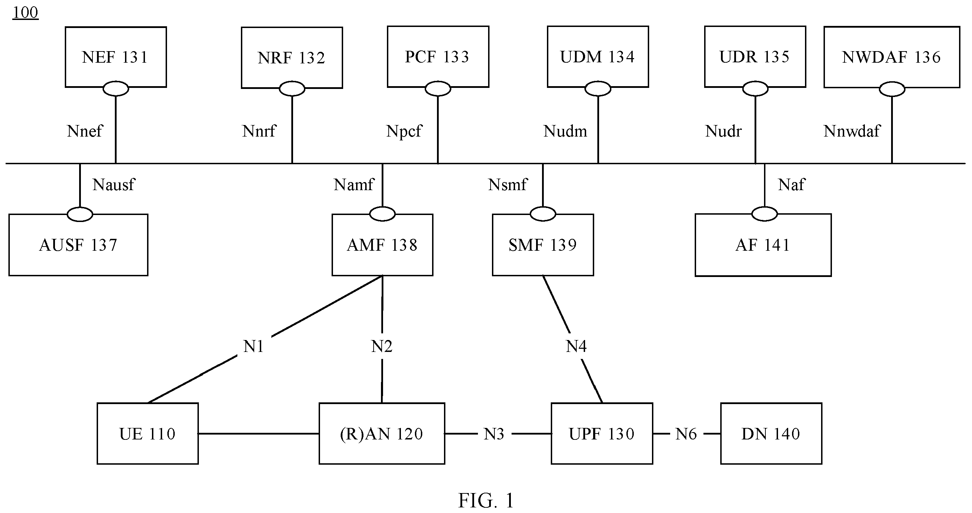

FIG. 1 is a diagram of a network architecture 100 to which embodiments of this application are applicable. As shown in FIG. 1, the network architecture may specifically include three parts: a terminal device part, a data network (data network, DN) part, and an operator network PLMN part. The following briefly describes a function of a network element of each part.

The terminal device part may include a terminal device 110, and the terminal device 110 may also be referred to as user equipment (user equipment, UE). The terminal device 110 in this application is a device having wireless transceiver functions, and may communicate with one or more core network (core network, CN) devices through an access network device (which may also be referred to as an access device) in a radio access network (radio access network, RAN) 140. The terminal device 110 may also be referred to as an access terminal, a terminal, a subscriber unit, a subscriber station, a mobile station, a remote station, a remote terminal, a mobile device, a user terminal, a user agent, a user apparatus, or the like. The terminal device 110 may be deployed on land, including an indoor, outdoor, handheld, or vehicle-mounted device; may be deployed on the water (for example, a ship); or may be deployed in the air (for example, on an aircraft, a balloon, or a satellite). The terminal device 110 may be a cellular phone (cellular phone), a cordless telephone set, a session initiation protocol (session initiation protocol, SIP) phone, a smartphone (smartphone), a mobile phone (mobile phone), a wireless local loop (wireless local loop, WLL) station, a personal digital assistant (personal digital assistant, PDA), or the like. Alternatively, the terminal device 110 may be a handheld device having a wireless communication function, a computing device, another device connected to a wireless modem, a vehicle-mounted device, a wearable device, an uncrewed aerial vehicle device, a terminal in internet of things or internet of vehicles, a terminal in any form in a 5G network or a future network, relay user equipment, a terminal in a future evolved 6G network, or the like. The relay user equipment may be, for example, a 5G residential gateway (residential gateway, RG). For example, the terminal device 110 may be a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), or the like. The terminal device herein is a 3GPP terminal. A type, a category, or the like of the terminal device is not limited in embodiments of this application. For ease of description, in this application, an example in which UE represents a terminal device is used for description below.

The operator network PLMN part may include but is not limited to a (radio) access network ((radio) access network, (R)AN) 120 and a core network (core network, CN) part.

The (R)AN 120 may be considered as a sub-network of an operator network, and is an implementation system between a service node in the operator network and the terminal device 110. To access the operator network, the terminal device 110 first passes through the (R)AN 120, and then may be connected to the service node in the operator network through the (R)AN 120. An access network device (RAN device) in embodiments of this application is a device that provides a wireless communication function for the terminal device 110, and may also be referred to as a network device. The RAN device includes but is not limited to a next generation NodeB (next generation node base station, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmission reception point (transmitting and receiving point, TRP), a transmission point (transmitting point, TP), a pico (pico), a mobile switching center, a network device in a future network, or the like. In systems using different radio access technologies, devices with functions of the access network device may have different names. For ease of description, in all embodiments of this application, the foregoing apparatuses that provide a wireless communication function for the terminal device 110 are collectively referred to as an access network device, or referred to as a RAN or an AN for short. It should be understood that a specific type of the access network device is not limited in this specification.

The CN part may include but is not limited to the following network functions (Network Function, NF): a user plane function (user plane function, UPF) 130, a network exposure function (network exposure function, NEF) 131, a network repository function (network repository function, NRF) 132, a policy control function (policy control function, PCF) 133, a unified data management (unified data management, UDM) function 134, a unified data repository (unified data repository, UDR) function 135, a network data analytics function (network data analytics function, NWDAF) 136, an authentication server function (Authentication Server Function, AUSF) 137, an access and mobility management function (access and mobility management function, AMF) 138, and a session management function (session management function, SMF) 139.

The data network DN 140 may also be referred to as a packet data network (packet data network, PDN), and is usually a network located outside the operator network, for example, a third-party network. Certainly, in some implementations, the DN may alternatively be deployed by an operator, that is, the DN belongs to a part of the PLMN. Whether the DN belongs to the PLMN is not limited in this application. The operator network PLMN may access a plurality of data networks DNs 140. The data network DN 140 may be deployed with a plurality of services, and may provide a data service, a voice service, and/or the like for the terminal device 110. For example, the data network DN 140 may be a private network of a smart factory, a sensor installed in a workshop of the smart factory may be the terminal device 110, a control server of the sensor is deployed in the data network DN 140, and the control server may provide a service for the sensor. The sensor may communicate with the control server, to obtain instructions of the control server, transmit collected sensor data to the control server according to the instructions, and the like. For another example, the data network DN 140 may be an internal office network of a company, a mobile phone or a computer of an employee of the company may be the terminal device 110, and the mobile phone or the computer of the employee may access information, data resources, and the like in the internal office network of the company. The terminal device 110 may establish a connection to the operator network through an interface (for example, N1) provided by the operator network, and use the data service, the voice service, and/or the like provided by the operator network. The terminal device 110 may further access the data network DN 140 through the operator network, and use an operator service deployed in the data network DN 140 and/or a service provided by a third party.

The following further briefly describes NF functions included in the CN.
1. The UPF 130 is a gateway provided by an operator, and is a gateway for communication between the operator network and the data network DN 140. The UPF network function 130 includes user plane-related functions such as data packet routing and transmission, data packet detection, traffic usage reporting, quality of service (quality of service, QoS) handling, lawful interception, uplink data packet detection, and downlink data packet storage.
2. The NEF 131 is a control plane function provided by an operator, mainly enables a third party to use a service provided by a network, and supports the network in exposing a capability of the network, event and data analysis, providing security configuration information for a PLMN from an external application, conversion of information exchanged inside and outside the PLMN, and the like.
3. The NRF 132 is a control plane function provided by an operator, and may be configured to maintain real-time information of a network function and a service in a network. For example, the NRF 132 supports network service discovery, maintains services supported by NF configuration data (an NF profile) of NF instances, supports service discovery of a service communication proxy (service communication proxy, SCP), maintains SCP configuration data (an SCP profile) of SCP instances, sends notifications about newly registered, deregistered, and updated NFs and SCPs, maintains health statuses of NFs and SCPs, and the like.
4. The PCF 133 is a control plane function provided by an operator, and supports a unified policy framework to govern network behavior and provide subscription information related to a policy rule and policy decision for another control function.
5. The UDM 134 is a control plane function provided by an operator, and is responsible for storage of a subscription permanent identifier (subscription permanent identifier, SUPI) of a subscriber of the operator network, a generic public subscription identifier (generic public subscription identifier, GPSI) of the subscriber, a credential (credential), and other information. The SUPI is first encrypted during transmission, and an encrypted SUPI is referred to as a subscription concealed identifier (subscription concealed identifier, SUCI). The information stored in the UDM network function 134 may be used for authentication and authorization when the terminal device 110 accesses the operator network. The subscriber of the operator network may be specifically a user using a service provided by the operator network, for example, a user using a subscriber identity module (subscriber identity module, SIM) card of China Telecom or a user using a SIM card of China Mobile. The credential of the subscriber may be a long-term key stored in the SIM card, or a stored small file, for example, information related to encryption of the SIM card, and is used for authentication and/or authorization. It should be noted that for ease of description, information such as the permanent identifier, the credential, a security context, authentication data (cookie), and a token related to verification/authentication and authorization is not limited or distinguished in embodiments of this application.
6. The UDR 135 is a control plane function provided by an operator, and provides a function of storing and obtaining subscription data for a UDM, provides a function of storing and obtaining policy data for a PCF, stores and obtains NF group ID (group ID) information of a user, and the like.
7. The NWDAF 136 is a control plane function provided by an operator. A main function of the NWDAF 136 is to collect data from an NF, an external application function (application function, AF), an operation, administration and maintenance (operations, administration and maintenance, OAM) system, and the like, and provide the NF and the AF with NWDAF service registration, data exposure, data analysis, and the like. Specifically, the NWDAF may include the following logical functions:

Analytics logical function (AnLF): a logical function in the NWDAF, used to perform inference, derive analytics information (that is, derive statistical information and/or a prediction based on an analytics consumer request), and expose an analytics service.

Model training logical function (MTLF): a logical function in the NWDAF, used to train a machine learning (ML) model and exposes a new training service, for example, provide a trained ML model.

It should be understood that the NWDAF may include the MTLF, the AnLF, or two logical functions. The NWDAF including the AnLF is locally configured with an ID of the NWDAF including the MTLF and an analytics ID(s) supported by each NWDAF including the MTLF, to retrieve the trained ML model. If necessary, the NWDAF including the AnLF uses NWDAF discovery for the NWDAF including the MTLF in a configuration ID set of the NWDAF including the MTLF.

It should be understood that, to ensure accuracy of an analysis output of the analytics ID, based on abnormal behavior analysis of UE from the NWDAF or another NWDAF, including a list of abnormal UE and an observed time window, the NWDAF is configured to detect and delete input data from abnormal UE, may generate a new ML model and/or an analysis output for the analytics ID during the observed time window without input data related to the list of abnormal UE, and then send/update ML model information and/or the analysis output to a subscribed NWDAF service consumer.

To support NF discovery and selection of an NWDAF instance including the MTLF, the AnLF, or both, the instance can provide a required service (for example, analysis exposure or ML model deployment) for a required type of analysis. When each NWDAF instance is registered with the NRF, a list of supported analytics IDs (possibly for each supported service) and another NRF registration element of an NF profile should be provided. An NF that needs to discover an NWDAF instance that provides support for specific services of a specific type of analysis may query the NRF for the NWDAF that supports the required service and the required analytics ID.

An NWDAF architecture allows a plurality of NWDAF instances to be arranged in a hierarchy/tree with a flexible quantity of layers/branches. A quantity and arrangement of hierarchical layers and a function of each NWDAF instance still have deployment choices.

In hierarchical deployment, when a DCCF and an MFAF do not exist in a network, the NWDAF may provide a data collection exposure capability, to generate analysis based on data collected by another NWDAF.

To make the NWDAF discoverable in some network deployments, the NWDAF may be configured (for example, used for UE mobility analysis) to register UE served by the NWDAF and a related analytics ID in the UDM (Nudm_UECM_registration service operation). Registration in the UDM should be performed when the NWDAF starts to serve the UE(s) or collect data for the UE(s). Deregistration in the UDM occurs when the NWDAF deletes an analysis context for the UE with the related analytics ID (refer to Section 6.1B.4).

In a future communication system, a network data analytics function network element may still be the NWDAF network element, or may have another name. This is not limited in this application.

8. The AUSF 137 is a control plane function provided by an operator, and is usually used for primary authentication, namely, authentication between the terminal device 110 (the subscriber) and the operator network. After receiving an authentication request initiated by the subscriber, the AUSF network function 137 may perform authentication and/or authorization on the subscriber by using authentication information and/or authorization information stored in the UDM network function 134, or generate authentication information and/or authorization information of the subscriber by using the UDM network function 134. The AUSF network function 137 may feed back the authentication information and/or the authorization information to the subscriber.

9. The AMF 138 is a control plane network function provided by an operator network, and is responsible for access control and mobility management when the terminal device 110 accesses the operator network, for example, including functions such as mobility status management, allocation of a temporary user identity, and user authentication and authorization.

10. The SMF 139 is a control plane network function provided by an operator network, and is responsible for managing a protocol data unit (protocol data unit, PDU) session of the terminal device 110. The PDU session is a channel for transmitting a PDU, and the terminal device and the data network DN 140 need to transmit PDUs to each other through the PDU session. The SMF network function 139 is responsible for establishment, maintenance, deletion, and the like of the PDU session. The SMF network function 139 includes session-related functions such as session management (for example, session establishment, modification, and release, including tunnel maintenance between the user plane function UPF 130 and the (R)AN 120), selection and control of the UPF network function 130, service and session continuity (service and session continuity, SSC) mode selection, and roaming.

Optionally, the network architecture may further include a data collection coordination function (data collection coordination function, DCCF) network element and an analytics data repository function (analytics data repository function, ADRF) network element. The ADRF provides data and analysis storage and retrieval services for a consumer. For example, the consumer sends a Nadrf_DataManagement_StorageRequest including to-be-stored data or analysis to the ADRF. Alternatively, the consumer sends Nadrf_DataManagement_StorageSubscriptionRequest to the ADRF, to request the ADRF to subscribe to receiving of data or analysis for storage. Then, the ADRF subscribes to the NWDAF or the DCCF to obtain data or analysis, and provides an ADRF notification address (or a notification association ID). The analysis or the data is then provided as a notification by using a DCCF, NWDAF, or MFAF service (Ndccf_DataManagement Nnwdaf_DataManagement or Nmfaf_3caDataManagement service).

For example, the consumer sends an Nadrf_DataManagement_RetrievalRequest request to the ADRF, to retrieve data or analysis in a specified data or analysis collection time window. The ADRF determines availability of data or analysis in a repository of the ADRF and sends the data or the analysis to the consumer in a response, or obtains a description of the data or the analysis. Alternatively, the consumer sends an Nadrf_DataManagement_RetrievalSubscribe request to the ADRF, to retrieve data or analysis in a specified data or analysis collection time window. If the time window includes the future and the ADRF has subscribed to receiving of data or analysis, a subsequent notification received by the ADRF is sent by the ADRF to a notification endpoint. The ADRF determines the availability of the data or the analysis and sends a success/failure indication to the consumer in a response. Then, the ADRF uses Nadrf_DataManagement_RetrievalNotify to send one or more notifications to a notification address (or a notification association ID) specified by the consumer. The notification provides data or analysis, or provides the endpoint with an instruction for obtaining data or analysis by using Nadrf_DataManagement_RetrievalRequest.

It may be understood that the foregoing network elements or functions may be physical entities in a hardware device, software instances running on dedicated hardware, or virtualized functions instantiated on a sharing platform (for example, a cloud platform). In short, an NF may be implemented by hardware or software.

In FIG. 1, Nnef, Nnrf, Npcf, Nudm, Nudr, Nnwdaf, Nausf, Namf, Nsmf, N1, N2, N3, N4, and N6 are interface sequence numbers. For example, for meanings of the interface sequence numbers, refer to meanings defined in the 3GPP standard protocol. The meanings of the interface sequence numbers are not limited in this application. It should be noted that interface names between the network functions in FIG. 1 are merely examples. During specific implementation, the interface names of the system architecture may be alternatively other names. This is not limited in this application. In addition, names of messages (or signaling) transmitted between the foregoing network elements are merely examples, and do not constitute any limitation on functions of the messages.

It should be noted that the interfaces between the control plane network elements may alternatively be point-to-point interfaces. Details are not described herein.

It should be understood that the network architecture to which embodiments of this application can be applied is merely an example for description, and the network architecture to which embodiments of this application are applied is not limited thereto. Embodiments of this application are applied to any network architecture that can implement functions of the foregoing network elements.

It should be further understood that the AMF, SMF, UPF, PCF, UDM, and the like shown in FIG. 1 may be understood as network elements configured to implement different functions, for example, may be combined into a network slice as required. These network elements may be independent devices, may be integrated into a same device to implement different functions, may be network elements in a hardware device, may be software functions running on dedicated hardware, or may be virtualization functions instantiated on a platform (for example, a cloud platform). Specific forms of the network elements are not limited in this application.

It should be further understood that the names are defined merely for ease of distinguishing between different functions, and should not constitute any limitation on this application. This application does not exclude a possibility that another name is used in the 5G network and another future network. For example, in a 6G network, some or all of the foregoing network elements may still use terms in 5G, or may use other names.

It should be further understood that names of the interfaces between the network elements in FIG. 1 are merely examples, and the interfaces may have other names in a specific implementation. This is not specifically limited in this application. In addition, names of messages (or signaling) transmitted between the foregoing network elements are merely examples, and do not constitute any limitation on functions of the messages.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

In a 5G service-based system architecture, two parties that communicate with each other based on a service-based interface are respectively referred to as a service consumer (service consumer) and a service producer (service producer). A party that requests a service is the service consumer, and a party that provides the service is the service producer. The service consumer may also be referred to as a consumer, a consumer network element, a user, a request side, a requester, a service consumer network element, or the like. The service producer may also be referred to as a producer network element, a service producer network element, a provider, a producer, a responder, or the like. This is not limited in this application.

For the service-based architecture, two authorization manners for mutual access between NFs are defined in a standard: a static authorization manner and an OAuth authorization manner.

Specifically, the static (static) authorization manner is a mechanism that is based on a local authorization policy. For example, in a scenario in which the AMF accesses the SMF, the SMF determines, based on a parameter in a service request sent by the AMF and a local policy, whether to allow the AMF to access a service of the SMF. If determining, based on the local authorization policy, that the AMF is allowed to access the service of the SMF, the SMF provides the service for the AMF. Herein, the local policy may be whether an AMF-type network is allowed to access the service of the SMF. An example of the local policy is not limited in this application.

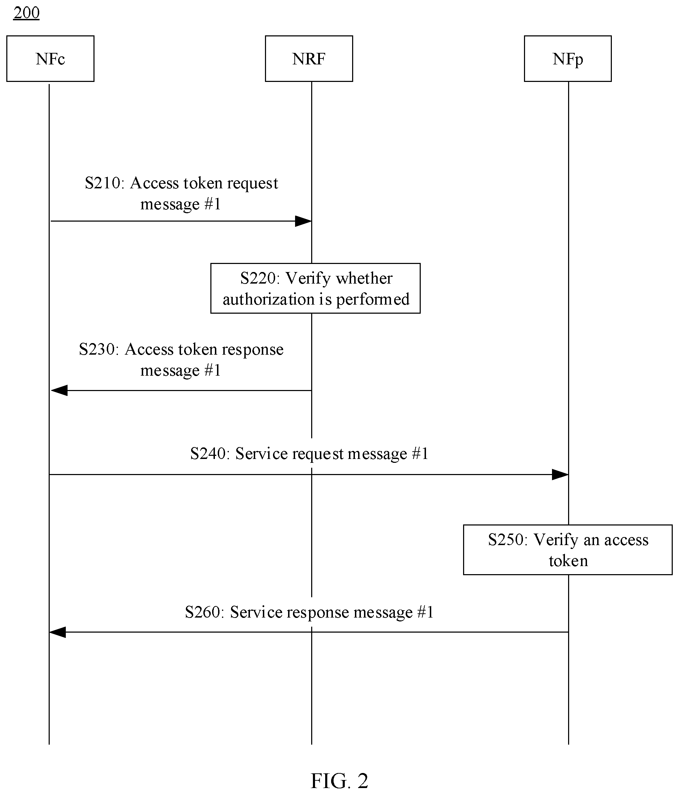

The OAuth authorization manner is an open authorization mechanism that is based on an authorization parameter such as a token, and includes entities such as an authorization center, a service user, a service producer, or a resource owner. The authorization center authorizes whether to allow the service user to use a service of the service producer. If allowed, a token is distributed to the service user. The service user sends the token to the service producer. After the token is successfully verified, the service producer provides the service for the service user. In the 5G network, an NRF network element is defined, and is responsible for determining service authorization. For example, before accessing a service producer function network element (NF service producer, NFp), a service consumer function network element (NF service consumer, NFc) first sends a request message to the NRF. After determining that the NFc is allowed to access the NFp, the NRF generates an authorization token, and sends the token to the NFc. Then, when accessing a service of the NFp, the NFc sends a service request that carries the token. After the token is successfully verified, the NFp provides the corresponding service for the NFc. With reference to FIG. 2, the following briefly describes how an NF service consumer obtains an access token before accessing a service of an NF service producer of a specific NF type.

FIG. 2 is a schematic flowchart of a method 200 for obtaining an access token and an NF service. As shown in FIG. 2, the method includes the following steps.

S210: An NFc (for example, an NWDAF) sends an access token request message #1 to an authorization service function network element (for example, an NRF).

Correspondingly, the NRF receives the access token request message #1 from the NFc.

The token request message #1 is used to request the NRF to authorize the NF consumer and issue an access token (Access Token).

For example, the NFc may request an access token for accessing a service of an NFp of a specific network function type (NF type). The token request message #1 includes an NF instance ID of the NFc (for example, an NF Instance Id(s) of the NF service consumer), a requested "scope", an NF type of an expected NF service producer instance, and an NF service consumer, or an expected NF service name and an NF instance ID of an NF service consumer. The requested "scope" includes the expected NF service name and optional information about an "additional scope", and the "additional scope" includes a requested resource and a requested resource operation (service operation).

For example, the NFc may request an access token for accessing a service of a specific NF service producer instance or an NF service producer service instance. The token request message #1 includes the NF instance ID of the NFc, the requested "scope", the expected NF service name, and the NF instance ID of the NF service consumer. The requested "scope" includes the expected NF service name and optional information about an "additional scope", and the "additional scope" includes a requested resource and a requested resource operation (service operation).

Optionally, the NF service consumer includes an NSSAI list or an NSI ID list of an expected NF service producer instance.

Optionally, the token request obtaining information further includes an NF set ID of the expected NF service producer instance and an S-NSSAI list of the NF service consumer.

For example, the request message #1 may be referred to as an Nnrf_AccessToken_Get Request message. It should be understood that a name of the message (or information) is not limited in this application provided that a corresponding function can be implemented.

Optionally, before the NFc sends the access token request message #1 to the NRF, the NFc and the NFp complete registration with the NRF. To ensure security of information exchange between the NF and the NRF, registration information exchange may comply with an OAuth 2.0 standard authorization framework formulated by the Internet Engineering Task Force (Internet Engineering Task Force, IETF). In OAuth 2.0, a client (client) corresponds to the NFc herein, a client ID corresponds to the NFc instance ID, and an authorization server (authorization server) corresponds to the NRF. For a specific NF registration procedure, refer to an existing protocol. Details are not described herein.

It should be noted that this implementation is applicable to a case in which the NFc and the NFp belong to a same operator, and is also applicable to a case in which the NFc and the NFp belong to different operators. This is not specifically limited in this application.

S220: The NRF verifies whether the NFc is authorized, and generates an access token token #1 (for example, access_token_nwdaf).

In a service-based system architecture, when the NFc requests a service from the NFp, the NFp needs to perform authorization check on the service requested by the NFc, that is, check whether the NFc is authorized to use the requested service. The NFp provides the corresponding service for the NFc only after the authorization check succeeds. For authorization verification performed by the NFp on the service requested by the NFc, an authorization verification solution based on the access token (access token) may be used.

For example, based on an OAuth authorization framework, the NRF verifies whether the access token request message #1 is authentic and valid, and determines whether to accept the request of the NFc. The OAuth authorization framework does not limit a specific verification method used by the NRF. For example, the NFc may obtain a digital certificate in advance, where the certificate is issued by the NRF or another network element, and a valid profile of the NFc is described in the certificate. The NRF uses a public key of an issuer (the NRF or the another network element) to verify authenticity of the digital certificate, to determine authenticity of content in the certificate. For another example, the NFc may alternatively obtain, in advance, an NFc profile signed by the NRF or another network element, and the NRF verifies authenticity of the signature by using a public key of a signer, to determine authenticity of the NFc profile. For another example, the NFc and the NRF may alternatively use another pre-agreed credential (credentials) or method (for example, a password or a shared key), so that the NRF can verify authenticity of the NFc profile. This is not limited in this application.

In addition, if the NRF stores a profile of the NFc, the NRF may check whether an input parameter in the access token request message #1 is consistent with a parameter in the stored NFc profile of the NFc. In addition, the NRF may also verify whether a parameter (for example, the NF type of the NFc and the NF type of the NFp) in the access token request message #1 is consistent with an authorized NF type stored or included in the certificate.

For example, the NRF may verify whether an input parameter (for example, an NF type) in an access token request matches a corresponding parameter in a public key certificate of the NF service consumer or a corresponding parameter in the NF profile of the NF service consumer, and check whether the NF service consumer has permission to access the requested service.

It should be understood that, if the verification succeeds, that is, the NFc is authorized, the NRF generates the token #1 including claims (claims). The claims include an NF instance ID of an authorization network element, the NF instance ID of the NF service consumer, the NF type of the NF service producer, the expected service name, expiration time (expires_in), and the like. Optionally, the claims may further include the additional scope (a resource that is allowed to be requested and a requested operation for the resource), the S-NSSAI list or the NSI ID list of the expected NF service producer instance, the NF set ID of the expected NF service producer instance, and the like. For example, the access token includes an NF instance ID of the NRF, the NF instance ID of the NF service consumer, and the NF type of the NF service producer, or an NF instance ID of a requested NF service producer or a plurality of NF instance IDs, the expected service name, an authorized scope, the expiration time, and the optional information about the "additional scope".

Further, the NRF may perform security protection on the generated token #1. The security protection herein may be integrity protection. For example, the NRF generates a message authentication code MAC for the token #1 by using a shared key, and the NRF may send both the MAC and the token #1 to the NFc. The MAC is used to verify whether information in the token #1 is tampered with. Alternatively, the NRF signs the claims by using a private key, and the NFp may verify, by using the signature, whether the claims are tampered with. If the NFc is not authorized, the NRF cannot issue the token #1 to the NFc. It should be understood that integrity protection (Integrity protection) is to use a physical means or a cryptographic method to ensure that information is not tampered with or is not modified without authorization during generation, transmission, and storage of the information, and subsequent operations.

Optionally, the claims may further include another parameter, for example, an allowed resource for use, network slice information, the information about the "additional scope" (that is, the allowed resource and the allowed resource operation (service operation)), the NSSAI or NSI ID list of the expected NFp instance, and the NF set ID of the expected NFp instance.

S230: The NRF sends an access token response message #1 to the NFc.

Correspondingly, the NFc receives the access token response message #1 from the NRF.

Optionally, the access token response message #1 may include a validity period of the token #1, and the token #1 may be usually reused in the validity period.

For example, if all parameters in the access token request message #1 are successfully verified, and the NFc is authorized to access the requested service, the NRF sends the generated token #1 to the NFc by using the access token response message #1 (for example, Nnrf_AccessToken_Get Response). Optionally, the access token response message #1 may further include another parameter, for example, expiration time of the token #1 and a requested scope in which the token #1 is allowed to be used. If the authorization verification in S202 fails, the NRF sends an error response or a rejection response to the NFc. A stored token may be reused in a validity period of the stored token, and is used to access a service from the requested NF producer of the NF type, or the NF instance ID of the requested NF service producer instance or the plurality of NF instance IDs listed in the claims.

S240: The NF service consumer sends a service request message #1 to the NF service producer

It should be understood that the service request message #1 includes the token #1.

For example, the NFp ensures integrity of the token by verifying the signature by using the public key of the NRF or checking the MAC value by using the shared key. If the integrity check succeeds, the NF service producer should verify the claims in the token for check of the NF service producer in the following manner.

Optionally, the NF service producer checks whether the access token matches an ID of the NF service producer or a type of the NF service producer.

The NF service producer verifies the expiration time in the access token based on current data/time to check whether the access token has not expired.

Optionally, the access token includes the NSSAI list or the NSI ID list, and the NF service producer checks whether the NF service producer is served by a corresponding slice.

Optionally, the access token includes the NF set ID, and the NF service producer should check whether the NF set ID in the claims matches an NF set ID of the NF service producer.

Optionally, the access token includes a scope, and the NF service producer checks whether the scope matches the requested service operation.

Optionally, if the access token includes the information about the "additional scope" (that is, the allowed resource and the allowed operation (service operation) on the resource), the NF service producer checks whether the additional scope matches the requested service operation.

S250: The NF service producer verifies the access token.

S260: The NF service producer sends a service response message #1.

It should be understood that, if the verification succeeds, the NFp performs the requested service, and responds to the NFc.

It should be understood that, if the verification fails, the NF service producer returns an error response or a rejection response to the NFc.

In the communication field, a machine learning (Machine Learning, ML) model may be combined with an NWDAF (Network Data Analytics Function, network data analytics function) to perform a prediction service in different scenarios. An AI/ML model is shared between NWDAFs and/or NFs, for example, from the NWDAF to the NWDAF or from an ADRF to the NWDAF. In different scenarios, an NF producer of the AI/ML model may store the model in the ADRF, the NWDAF, or another entity. With enhancement of the ADRF function, the AI/ML model is stored to facilitate distribution and sharing of these models between NFs.

However, because the AI/ML model and an algorithm of the AI/ML model are usually proprietary and protected by intellectual property rights, a behavior of requesting to obtain the AI/ML model by another person needs to be authorized by an owner, which has considerable business value. In addition, because the ADRF cannot be considered as a fully trusted entity that stores a sensitive AI/ML data model, when the 3GPP-defined authorization solution for the service-based architecture (SBA, Service-Based Architecture) shown in the method 200 is applied to an AI/ML model sharing scenario, this manner of authorization only through the NRF and an authorization granularity in a scope of a service level or a resource/operation level cannot ensure security of model authorization and sharing. A reason is that the ADRF or the NWDAF (or any other network function that may store the AI/ML model) cannot verify whether the NF consumer is authorized by the owner of the AI/ML model and the algorithm of the AI/ML model to retrieve and obtain the AI/ML model.

Therefore, it needs to be ensured that only the NF that generates the AI/ML model and the NF that obtains AI/ML model access authorization from the NF that generates the AI/ML model can read and use these models. Based on this, embodiments of this application provide a method used by an NF to obtain model authorization and sharing of an AI/ML model, to protect business value of the AI/ML model and an algorithm of the AI/ML model.

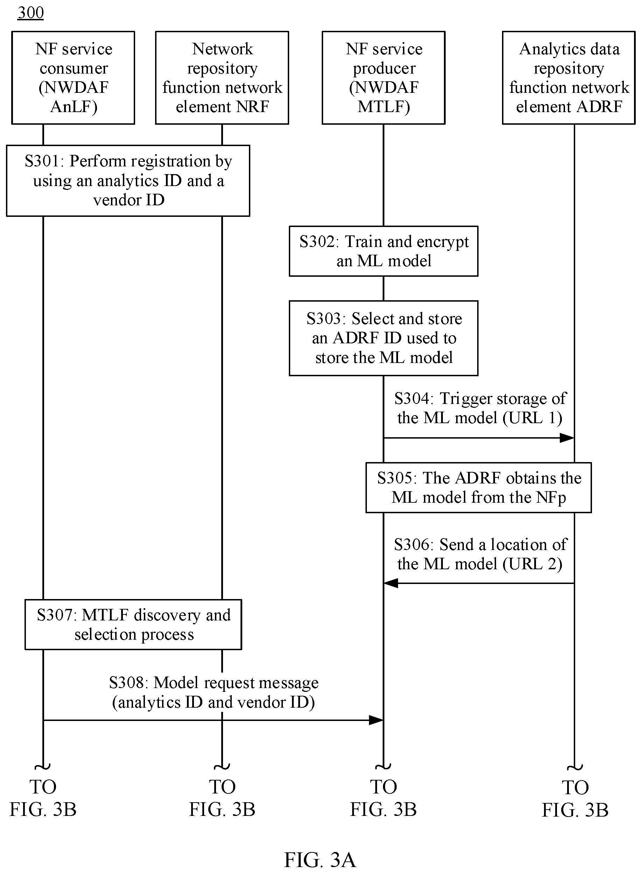

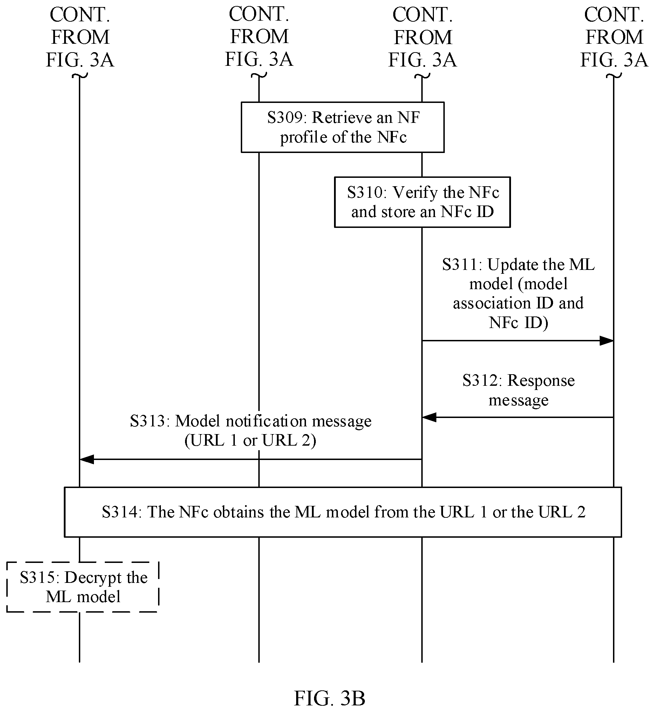

FIG. 3A and FIG. 3B are a schematic flowchart of a model sharing method 300 according to an embodiment of this application. To be specific, an NFc requests, from an analytics data repository function network element ADRF, to obtain a model trained by an NFp.

S301: The NF service consumer NFc (for example, an NWDAF AnLF) registers with an NRF by using an analytics ID and a vendor ID.

It should be understood that the analytics ID (analytics ID) is a type of an ML model that the NFc expects to access.

It should be understood that the vendor ID (vendor ID) indicates a vendor of an NF, and may be an ID of the vendor, or may be an internal implementation of the vendor. Specifically, the NWDAF including the AnLF registers an NF profile (NF profile) of the NWDAF with the NRF. The profile is supported by the NWDAF including the AnLF and the vendor ID.

S302: The NF service producer NFp (for example, an NWDAF MTLF) trains an ML model.

Optionally, the NWDAF including the MTLF encrypts the ML model based on an implementation of a vendor.

S303: The NFp selects and stores an ADRF ID used to store the ML model.

The NFp determines that the ML model may be stored in the ADRF, discovers and selects the ADRF via the NRF, and stores a selected ADRF instance ID of the model.

S304: The NFp triggers an ADRF storage service to the ADRF.

A message includes a model association ID and a model address (URL 1) in the MTLF.

S305: The ADRF obtains the ML model from the NFp.

Specifically, the ADRF securely obtains the model from the NFp by using the URL 1.

It should be understood that the NFp verifies that the ADRF is the ADRF instance selected in step S303, and checks whether the model association ID is correct. It is assumed that the vendor ID of the ADRF does not need to be verified.

S306: The ADRF sends a location (URL 2) of the ML model to the NFp.

S307: The NFc performs a discovery and selection procedure on the NFp via the NRF.

S308: The NFc requests to obtain the model from the NFp.

The NWDAF including the AnLF performs an Nnwdaf_MLModelProvision service operation on the NWDAF including the MTLF, and a message includes the analytics ID and the vendor ID, to retrieve the ML model of the analytics ID.

It should be understood that the analytics ID corresponds to an analytics ID corresponding to a model that the NFc expects to obtain, and the vendor ID is a vendor ID of the NFc.

S309: The NFp retrieves the NF profile of the NFc from the NRF.

Specifically, the NWDAF including the MTLF retrieves, from the NRF, the NF profile of the NWDAF including the AnLF, and obtains, from the NF profile, the NWDAF including the vendor ID of the AnLF.

Optionally, if the determined ML model is stored in the ADRF, the NWDAF including the MTLF triggers an ADRF storage update service to the ADRF, where a message includes the model association ID and an allowed NF instance list. The ADRF stores the allowed NF instance list of the ML model referenced by the model association ID.

S310: The NFp verifies the NFc and stores an NFc ID

Specifically, the NWDAF including the MTLF verifies whether the vendor ID of the NWDAF including the AnLF in the request message is the same as the vendor ID in the NF profile of the NWDAF, and whether the vendor ID is included in an interoperability identifier of the NWDAF.

It should be understood that, if the verification succeeds, the NWDAF including the MTLF determines the ML model to be shared for the requested analytics ID, and stores the NF instance ID of the NWDAF including the AnLF as a part of the allowed NF instance list of the ML model.

S311: Optionally, the NFp updates the ML model to the ADRF.

Specifically, if it is determined that the authorized ML model is stored in the ADRF, the NWDAF including the MTLF triggers the ADRF storage update service to the ADRF, where the message includes the model association ID and the allowed NF instance list. The ADRF stores the allowed NF instance list of the ML model referenced by the model association ID.

S312: The ADRF sends response information to the NFp.

S313: The NFp sends a request model notification message to the NFc.

Specifically, the NWDAF including the MTLF sends a request response message (Nnwdaf_MLModelProvision notification) to the NWDAF including the AnLF, where the request response message includes an address of the determined ML model, the address may be an address stored in the NWDAF including the MTLF, or may be an address in the ADRF. S314: The NFc obtains the ML model from the address.

Specifically, the NWDAF including the AnLF obtains the target ML model by using the URL received from S313.

For example, when the ML model is stored in the NWDAF including the MTLF, the NWDAF including the MTLF verifies that the NWDAF including the AnLF is the NF consumer instance stored in S310.

For example, when the ML model is stored in the ADRF, the ADRF verifies whether the NWDAF including the AnLF is the part of the allowed NF instance list received in S311.

It should be understood that, if the verification succeeds, the NWDAF including the AnLF has permission to obtain the ML model.

S315: The NFc decrypts the ML model.

The NWDAF including the AnLF decrypts the received ML model based on the implementation of the vendor. A decryption manner of the ML model is not within a scope of 3 GPP.

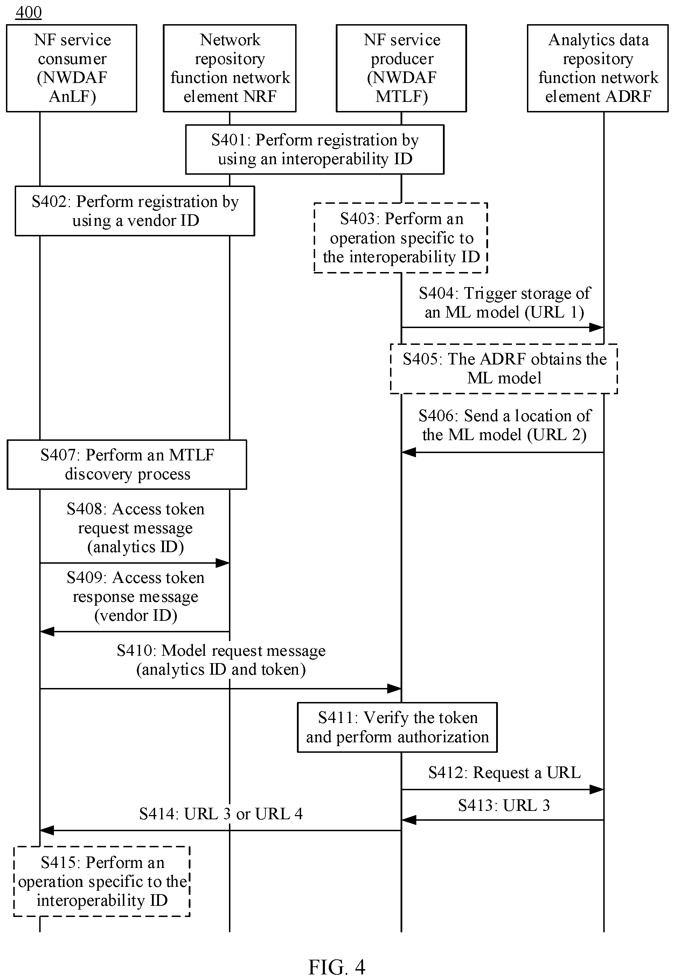

FIG. 4 is a schematic flowchart of another model sharing method 400 according to an embodiment of this application. As shown in FIG. 4, the method includes the following plurality of steps. For a part that is not described in detail, refer to an existing protocol.

S401: An NF service producer NFp (for example, an NWDAF MTLF) performs registration by using an interoperability identifier.

It should be understood that the interoperability identifier is a vendor ID list of NWDAFs that are allowed to obtain an ML model from the NFp.

S402: An NF service consumer NFc (for example, an NWDAF AnLF) performs registration by using a vendor ID.

S403: Optionally, the NFp performs an operation specific to the interoperability identifier.

For example, the NFp performs an operation such as encryption and integrity protection on security of the ML model, and an encryption manner of the ML model is not within a scope of 3GPP.

S404: The NFp triggers storage of the ML model.

For example, the NFp sends a request message to an ADRF, to request to store the ML model. The request message includes a storage address of the ML model in the NFp, for example, a URL 1. The request message further includes a model association identifier (for example, a model correction ID). Correspondingly, the ADRF obtains the protected ML model based on the address URL 1 of the ML model in the NFp, and stores the ML model.

S405: The ADRF obtains the ML model.

The ADRF securely obtains the protected model, and a specific obtaining method and security thereof are beyond the scope.

S406: The ADRF sends the storage location of the ML model to the NFp.

For example, the storage location of the ML model in the ADRF is a URL 2 that is used by the NFp to subsequently update or access the ML model.

S407: Perform an MTLF discovery process between the NFc and an NRF.

S408: The NFc sends an access token request message to the NRF.

Correspondingly, the NRF receives the access token request message from the NFc.

The access token request message includes an analytics ID.

For example, the access token request message may be an Nnrf_AccessToken_Get Request message.

S409: The NRF sends an access token response message to the NFc.

Correspondingly, the NFc receives the access token response message from the NRF.

The access token response message includes a token, and the token includes the vendor ID to which the NFc belongs.

For example, the access token response message may be an Nnrf_AccessToken_Get Response message.

Specifically, before step S409 is performed, the NRF needs to check whether the vendor ID of the NFc stored in an NFc profile in the NRF is one of vendor IDs in the interoperability identifier in an NFp profile.

S410: The NFc sends a model request message to the NFp.

Correspondingly, the NFp receives the model request message from the NFc.

The model request message includes the analytics ID and the token, and the token carries a specified vendor ID.

S411: The NFp verifies the token and performs authorization.

For example, the NFp needs to verify whether the specified vendor ID carried in the token corresponds to the analytics ID carried in the model request message. It should be understood that, when verifying that the token is valid, the NFp may perform further authorization by using the specified vendor ID in the token.

It should be understood that if the ML model requested by the NFc is stored in the ADRF, steps S411 to S413 continue to be performed.

S412: The NFp sends a message for requesting a URL to the ADRF.

Correspondingly, the ADRF receives the message for requesting the URL from the NFp.

The message for requesting the URL includes the model association identifier (for example, the model correction ID) or the URL 2.

For example, after receiving a URL request from the NFp, the ADRF checks whether an owner of the ML model stored in the URL request is the NFp. If the check succeeds, the ADRF provides a new storage address, for example, a URL 3, for the stored ML model, and continues to perform step S413. The URL 3 may be a URL that is used only once.

S413: The ADRF sends the URL 3 to the NFp.

Correspondingly, the NFp receives the URL 3 from the ADRF.

S414: The NFp sends the URL 3 to the NFc.

Correspondingly, the NFc receives the URL 3 from the NFp.

It should be understood that, if the ML model requested by the NFc is stored in the NFp, after step 410, the NFp provides a new storage address, for example, a URL 4, for the stored ML model, and returns the URL 4 to the NFc. In other words, steps S412 to S414 do not need to be performed. The URL 4 may be a URL that is used only once. Therefore, the NFc may obtain the protected ML model from the NFp or the ADRF based on the URL 4 or the URL 3.

S415: Optionally, the NFc performs an operation specific to the interoperability identifier.

For example, considering the interoperability identifier on the protected ML model, the NFc may perform an operation such as decryption and integrity check.

For ease of understanding of embodiments of this application, the following descriptions are provided.

First, in this application, unless otherwise specified or a logic conflict occurs, terms and/or descriptions in different embodiments are consistent and may be mutually referenced, and technical features in different embodiments may be combined based on an internal logical relationship thereof, to form a new embodiment.

Second, in this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In text descriptions of this application, the character "/" usually indicates an "or" relationship between associated objects. "At least one of the following items (pieces)" or a similar expression thereof indicates any combination of these items, including a single item (piece) or any combination of a plurality of items (pieces). For example, at least one of a, b, and c may indicate a, b, c, a and b, a and c, b and c, or a, b, and c. Each of a, b, and c may be in a singular form or a plural form.

Third, in this application, "first", "second", and various numbers (for example, #1 and #2) indicate differentiation for ease of description, but are not intended to limit the scope of embodiments of this application, for example, are intended to distinguish between different messages but not to describe a specific order or sequence. It should be understood that objects described in this way are interchangeable in an appropriate circumstance, so that a solution other than embodiments of this application can be described.

It should be noted that, in the following, meanings represented by information #1, resource indication information #1, and resource request information #1 are different from each other. It should be understood that names of information are merely examples for description. This is not limited in this application, and should not constitute any limitation on the technical solutions of this application.

Fourth, in this application, the descriptions "when...", "in a case that...", "if", and the like all mean that a device performs corresponding processing in an objective case, but are not intended to limit time. The descriptions do not necessarily mean that the device performs a determining action during implementation, and do not mean any other limitation.

Fifth, in this application, the terms "include", "have", and any variants thereof are intended to cover a non-exclusive inclusion. For example, a process, method, system, product, or device that includes a series of steps or units is not necessarily limited to those steps or units that are clearly listed, but may include other steps or units that are not clearly listed or are inherent to the process, method, product, or device.

Sixth, in this application, "indicate" may include a direct indication and an indirect indication. When a piece of indication information indicates A, the indication information may directly indicate A or indirectly indicate A, but it does not indicate that the indication information definitely carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of the sub-information may be the same or different. A specific sending method is not limited in this application.

The "indication information" in embodiments of this application may be an explicit indication, to be specific, a direct indication through signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

Seventh, in this application, a "protocol" may be a standard protocol in the communication field, for example, may include a 5G protocol, an NR protocol, and a related protocol used in a future communication system. This is not limited in this application. "Predefined" may include being defined in advance, for example, being defined in a protocol. "Preconfigured" may be implemented by prestoring corresponding code or a corresponding table in a device, or may be implemented in another manner that may indicate related information. A specific implementation thereof is not limited in this application.

Eighth, in this application, "store" may refer to being stored in one or more memories. The one or more memories may be separately disposed, or may be integrated in an encoder, a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

Ninth, in this application, "communication" may also be described as "data transmission", "information transmission", "data processing", or the like. "Transmission" includes "sending" and "receiving".

The following describes in detail the communication method provided in embodiments of this application with reference to the accompanying drawings. For example, the communication method may be applied to the communication system shown in FIG. 1.

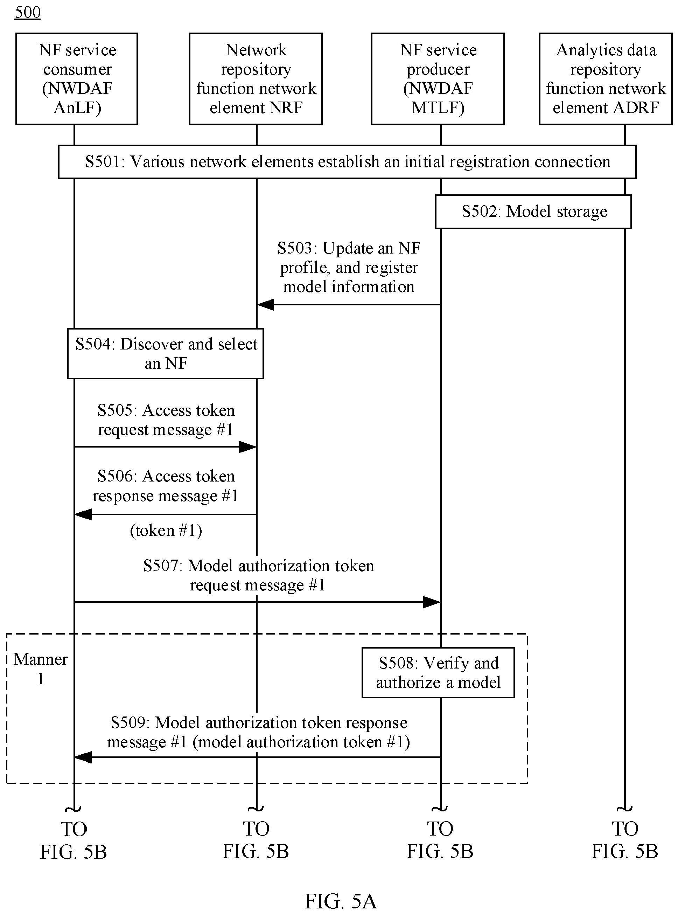

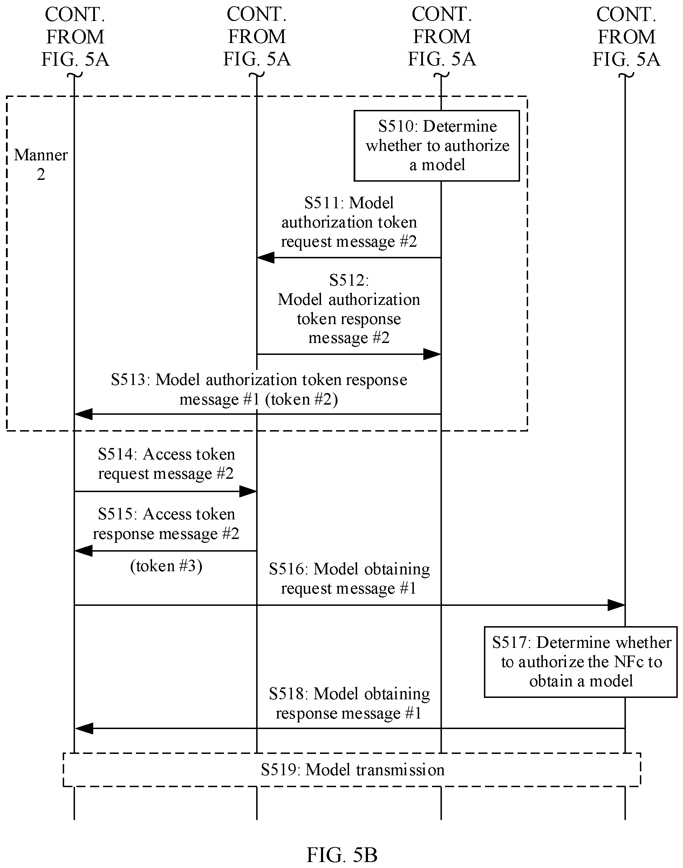

FIG. 5A and FIG. 5B are a schematic flowchart of a communication method 500 according to an embodiment of this application.

S501: Various network elements establish an initial registration connection.

For example, in step S501, an NWDAF including an MTLF registers an NFp profile Profile of the NWDAF with an NRF, and the profile includes an interoperability identifier supported by the NWDAF of the MTLF. An NWDAF including an AnLF registers an NFc profile Profile with the NRF, and the profile includes a vendor ID of the NWDAF of the AnLF.

S502: An NFp and an ADRF complete model storage.

The NFp (for example, NWDAF _MTLF) needs to first send a model storage request to the ADRF, where the model storage request includes MTLF model indication information (ML Model Identifier), used to identify a model.

After the ADRF determines that the model requested by the NFp is stored, the NFp and the ADRF complete a model transmission procedure, and then the ADRF sends, to the NFp, a model storage response message including a storage address of the model, where the storage address of the model is a URL or a fully qualified domain name (Fully Qualified Domain Name, FQDN).

Optionally, the NFp further stores model-related information in the ADRF, for example, an analytics ID, an application ID of the model, the interoperability identifier, and other information.

S503: The NFp updates the NF profile to the NRF, and registers model-related information.

For example, the NFp and the ADRF register the stored model with the NRF. For example, the NFp and the ADRF register an NFp ID of a vendor corresponding to the stored model, an interoperability identifier (Interoperability indicator) of the NFp, and the analytics ID (indicating that the model of the application is stored).

S504: An NFc discovers and selects, via the NRF, an NF for requesting a model.

For example, the NFc (for example, the NWDAF including the AnLF) performs an NF discovery request operation by using the requested analytics ID, to select an appropriate NFp (for example, the NWDAF including the MTLF, or the ADRF).

S505: The NFc sends an access token request message #1 to the NRF.

Correspondingly, the NRF receives the access token request message #1 from the NFc.

The access token request message #1 is used to request to obtain an access token.

For example, the access token request message #1 includes an NF type and/or an NFc ID of a target NF (for example, the NFp (the NWDAF including the MTLF, or the ADRF) and the NFc (for example, the NWDAF including the AnLF)).

Optionally, the access token request message #1 includes an analytics ID that the NFc expects to access.

Optionally, the access token request message #1 includes indication information #1, indicating vendor information of an NFp corresponding to a model that the NFc expects to obtain, or vendor information of an NWDAF of the NFc that supports interoperating an ML model (for example, an interoperability identifier of the NFc). For example, the vendor information may be a vendor ID. It should be understood that the vendor information of the model that the NFc expects to obtain is equivalent to vendor information of a model producer network element NWDAF corresponding to the model that the NFc expects to obtain. It should be noted that the NFc expects to obtain a model produced by a vendor indicated by the vendor information.

It should be understood that a name of the indication information #1 is not limited in this embodiment of this application provided that the foregoing function can be implemented.

Optionally, the access token request message #1 includes the interoperability identifier (Interoperability indicator) of the NFc.

Optionally, the access token request message #1 includes a vendor ID of the NFc.

Optionally, the access token request message #1 includes model filter information (ML Model Filter information). For example, the model filter information includes S-NSSAI(s) slice information, an area of interest, and the like.

For example, the access token request message #1 may be an Nnrf_AccessToken_Get Request message.

S506: The NRF sends an access token response message #1 to the NFc.

Correspondingly, the NFc receives the access token response message #1 from the NRF.

The access token response message #1 includes a token #1.

For example, the access token response message #1 may be an Nnrf_AccessToken_Get Response message.

Optionally, the token #1 includes an analytics identifier that the NFc is authorized to access. It should be understood that the authorized analytics identifier to be accessed can be the same as the expected analytics identifier to be accessed, or can be different from the expected analytics identifier to be accessed. This is not limited in this embodiment of this application.

Optionally, the token #1 includes an interoperability identifier of a model that the NFc is authorized to access. It should be understood that the authorized interoperability identifier to be accessed can be the same as the indication information #1, or can be different from the indication information #1. This is not limited in this embodiment of this application.

Optionally, the token #1 includes vendor information of the model that the NFc is authorized to access. It should be understood that the authorized vendor information to be accessed can be the same as the indication information #1, or can be different from the indication information #1. This is not limited in this embodiment of this application.

Optionally, the token #1 includes the vendor ID of the NFc.

Optionally, the token #1 includes an NF type and/or an NF instance ID of the model that the NFc is authorized to access.

It should be understood that, the NRF generates the token #1 based on NF profile information in the NWDAF including the MTLF only when verification succeeds, and then performs step S506.

For example, before performing step S506, the NRF needs to verify whether the vendor ID of the NWDAF including the AnLF is included in the interoperability identifier of the NWDAF of the MTLF.

For example, before performing step S506, the NRF needs to verify the vendor ID of the NWDAF including the MTLF in the indication information #1 of the NWDAF including the AnLF.

S507: The NFc sends a model authorization token request message #1 to the NFp.

Correspondingly, the NFp receives the model authorization token request message #1 from the NFc.

The model authorization token request message #1 is used to request to obtain an authorization token of a target model. For example, the second request message carries the expected analytics ID to be accessed and the token #1.

Optionally, the model authorization token request message #1 includes an ADRF ID of the target model. It should be understood that the NFc can determine an ADRF ID of a target MTLF in S504 before requesting to obtain the target MTLF.

Optionally, the model authorization token request message #1 includes the indication information #1.

### Manner 1

S508: The NFp verifies and authorizes a model.

It should be understood that the NFp needs to verify the token #1 before determining whether to authorize the model.

For example, the NFp verifies whether the requested analytics ID in the model authorization token response message #1 is in analytics IDs authorized by the token #1.

Optionally, if the token #1 includes the indication information #1 of the NFc, the NFp determines whether the vendor ID of the NFp is in the indication information #1 of the NFc.

Optionally, if the token #1 includes the vendor ID of the NFc, the NFp determines, based on the vendor ID, whether the NFc is in the interoperability identifier of the NFp.

It should be understood that, after the verification on the token #1 succeeds, if the NFp chooses to return a third-party address (URL or FQDN) of the model to the NFc, the NFp directly returns a model address to the NFc, and no subsequent step is performed.

It should be understood that the NFp generates a model authorization token #1 only when the verification succeeds. For example, the model authorization token may be a client credentials assertion (client credentials assertion, CCA). This is not limited in this embodiment of this application provided that a corresponding function can be implemented.

In a possible implementation, the model authorization token #1 generated by the NFp includes the NFp ID, the NFc ID, expiration time of the model authorization token #1, and the analytics ID of the model that the NFc is authorized to obtain.

In another possible implementation, the model authorization token #1 generated by the NFp includes the NFp ID, the NFc ID, expiration time of the model authorization token #1, and model indication information of the model that the NFc is authorized to obtain. By way of example and not limitation, the model indication information includes one or more of a model identifier (ML Model Identifier), a model address (Address of Model file), or a hash value of a model address (Hash of Address of Model file). The model address may be a URL or an FQDN. Correspondingly, the hash value of the model address may be a hash value of a URL or an FQDN.

In still another possible implementation, the model authorization token #1 generated by the NFp includes the NFp ID, the NFc ID, expiration time of the model authorization token #1, the analytics ID of the model that the NFc is authorized to obtain, and an ADRF ID of the ML model.

In still another possible implementation, the model authorization token #1 generated by the NFp includes the NFp ID, the NFc ID, expiration time of the model authorization token #1, the analytics ID of the model that the NFc is authorized to obtain, and model indication information of the ML model.

In still another possible implementation, the model authorization token #1 generated by the NFp includes the NFp ID, the NFc ID, expiration time of the model authorization token #1, model indication information of the model that the NFc is authorized to obtain, and an ADRF ID of the ML model.

In still another possible implementation, the model authorization token #1 generated by the NFp includes the NFp ID and the NFc ID, expiration time of the model authorization token #1, the analytics ID of the model that the NFc is authorized to obtain, model indication information of the ML model, and an ADRF ID of the model.

In still another possible implementation, the model authorization token #1 generated by the NFp includes the NFp ID, the NFc ID, expiration time of the CCA #1, and model indication information of the model that the NFc is authorized to obtain. Optionally, when the NFc includes an ADRF type or an ADRF ID in model authorization request information #1, the NFp may add an ADRF ID IE to the model authorization request information #1 during token authorization, to indicate that model authorization is applicable only to a model corresponding to an analytics ID in the ADRF ID.

S509: The NFp sends a model authorization token response message #1 to the NFc.

Correspondingly, the NFc receives the model authorization token response message #1 from the NFp.

The model authorization token response message #1 includes the model authorization token #1.

### Manner 2

S510: The NFp determines whether to authorize a model.

It should be understood that the NFp needs to verify the token #1 before determining whether to authorize the model. The NFp sends a model authorization token request message #2 to the NRF only when the token #1 is successfully verified, to request the NRF to generate a model authorization token #2 based on the information.

For example, the NFp verifies whether the requested analytics ID in the model authorization token response message #1 is in analytics IDs authorized by the token #1.

Optionally, if the token #1 includes the indication information #1 of the NFc, the NFp determines whether the vendor ID of the NFp is in the indication information #1 authorized to the NFc.

Optionally, if the token #1 includes the vendor ID of the NFc, the NFp determines, based on the vendor ID, whether the NFc is in the interoperability identifier of the NFp.

It should be understood that, after the verification succeeds, if the NFp chooses to return a third-party address (URL or FQDN) of the model to the NFc, the NFp directly returns a model address to the NFc, and no subsequent step is performed.

S511: The NFp sends a model authorization token request message #2 to the NRF.

Correspondingly, the NRF receives the model authorization token request message #2 from the NFp.

It should be understood that the NRF correspondingly generates a token #2 based on content of the model authorization token request message #2.

In a possible implementation, the model authorization token request message #2 includes the NFp ID, the NFc ID, expiration time of the token #2, and the analytics ID of the model that the NFc is authorized to obtain.

In another possible implementation, the model authorization token request message #2 includes the NFp ID, the NFc ID, expiration time of the token #2, and model indication information of the model that the NFc is authorized to obtain. By way of example and not limitation, the model indication information includes one or more of a model identifier (ML Model Identifier), a model address (Address of Model file), or a hash value of a model address (Hash of Address of Model file). The model address may be a URL or an FQDN. Correspondingly, the hash value of the model address may be a hash value of a URL or an FQDN.

In still another possible implementation, the model authorization token request message #2 includes the NFp ID, the NFc ID, expiration time of the token #2, the analytics ID of the model that the NFc is authorized to obtain, and an ADRF ID of the ML model.

In still another possible implementation, the model authorization token request message #2 includes the NFp ID, the NFc ID, expiration time of the token #2, the ML analytics ID of the model that the NFc is authorized to obtain, and model indication information of the ML model.

In still another possible implementation, the model authorization token request message #2 includes the NFp ID, the NFc ID, expiration time of the token #2, model indication information of the model that the NFc is authorized to obtain, and an ADRF ID of the ML model.

In still another possible implementation, the model authorization token request message #2 includes the NFp ID, the NFc ID, expiration time of the token #2, the analytics ID of the model that the NFc is authorized to obtain, model indication information of the ML model, and an ADRF ID of the ML model.

It should be understood that the token #2 generated by the NRF further includes an NRF ID.

It should be understood that, if the NFp chooses to return a third-party address (URL or FQDN) of the model to the NFc, the NFp directly returns a model address to the NFc, and no subsequent step is performed.

S512: The NRF sends a model authorization token response message #2 to the NFp.

Correspondingly, the NFp receives the model authorization token response message #2 from the NRF.

The model authorization token response message #1 includes the token #2.

It should be understood that the NRF correspondingly generates the token #2 based on content of the model authorization token request message #2 in S508.

S513: The NFp sends the model authorization token response message #2 to the NFc.

Correspondingly, the NFc receives the model authorization token response message #2 from the NFp.

The model authorization token response message #2 includes the token #2.

S514: The NFp sends the model authorization token response message #1 to the NFc.

Correspondingly, the NFc receives the model authorization token response message #1 from the NFp.

The model authorization token response message #1 includes the token #2.

The NFc obtains, in the foregoing manner 1 or manner 2 by using the model authorization token response message #1, the model authorization token #1 or the token #2 for obtaining the target model. Subsequent steps are described by using the token #2 as an example.

S515: Optionally, the NFc sends an access authorization token request message #2 to the NRF.

Correspondingly, the NFc receives the access authorization token request message #2 from the NRF.

The access authorization token request message #2 is used to request to access an ADRF in which the target model is located.

It should be understood that the NFc can determine, via the NRF or the NFp, the ADRF in which the target model is located.

S516: Optionally, the NRF sends an access authorization token response message #2 to the NFc.

Correspondingly, the NRF receives the access authorization token response message #2 from the NFc.

The access authorization token response message #2 includes the token #3.

For specific implementations of steps S515 and S516, refer to steps S408 and S409 in the method 400. For example, before performing step S516, the NRF needs to check whether the NWDAF including the AnLF is authorized to access the ADRF. The NRF generates the token #3 only when the verification succeeds, and then performs step S516. Details are not described herein.

S517: The NFc sends a model obtaining request message #1 to the ADRF.

Correspondingly, the ADRF receives the model obtaining request message #1 from the NFc.

The model obtaining request message #1 includes the analytics ID and the token #2.

Optionally, the model obtaining request message #1 further includes indication information #2, indicating vendor information of the model that the NFc expects to obtain.

Optionally, the model obtaining request message #1 further includes the NFc ID.

Optionally, the model obtaining request message #1 further includes a random number generated by the NFc, so that the ADRF can generate a ticket based on the random number in a subsequent step, to bind the NFc ID and model address information #1, to ensure that only a specific NFc can obtain the model based on the model address information #1.

S518: The ADRF determines whether to authorize the NFc to obtain the model.

It should be understood that, before determining whether to authorize the NFc to obtain the model, the ADRF needs to verify that a type of parameter information included in the model obtaining request #1 is the same as that of information in the token #2. Further, the ADRF verifies whether the foregoing two types of information are consistent, or whether the parameter information is within an authorization scope of the authorization information shown in the token #2.

For example, the ADRF verifies, based on the expiration time of the token #2, whether the token #2 is within a validity period, and the ADRF verifies that the NFc ID for sending the model obtaining request message #1 is consistent with the NFc ID in the token #2.

Optionally, when the token #2 includes the ADRF ID, the ADRF verifies that the ADRF ID in the token #2 is consistent with the NF ID of the ADRF.

Optionally, when the token #2 includes the NFp ID and the ML model indication information, the ADRF verifies a relationship between the NFp ID and the model indicated by the ML model indication information, and determines that the NFp actually has authorization permission for the model.

It should be understood that, after the verification in the foregoing example succeeds, the ADRF returns the model address information #1 (for example, an address of model file2) to the NFc based on information about the token #2 and local configuration information, so that the NFc obtains the model.

In a possible implementation, the ADRF may use the ticket as a model obtaining credential, and bind the NFc ID and the model address information #1, to ensure that only the specific NFc can obtain the model based on the model address information #1.

Further, the ADRF notifies content of the ticket to a third-party storage address.

By way of example and not limitation, the content of the ticket may be [token #2, message authentication code (Message authentication code, MAC) of the token #2, random number provided by the NFc, and random number generated by the ADRF].

Optionally, the ticket further includes expiration time of the ticket.

S519: The ADRF sends a model obtaining response message #1 to the NFc.

Correspondingly, the NFc receives the model obtaining response message #1 from the ADRF.

The model obtaining response message #1 includes an address for storing the target model.

Optionally, the model obtaining response message #1 further includes the ticket in S519.

Optionally, the ticket is included in the model address information #1.

S520: The NFc and the ADRF perform model transmission.

The NFc obtains the target model based on the model address information #1.

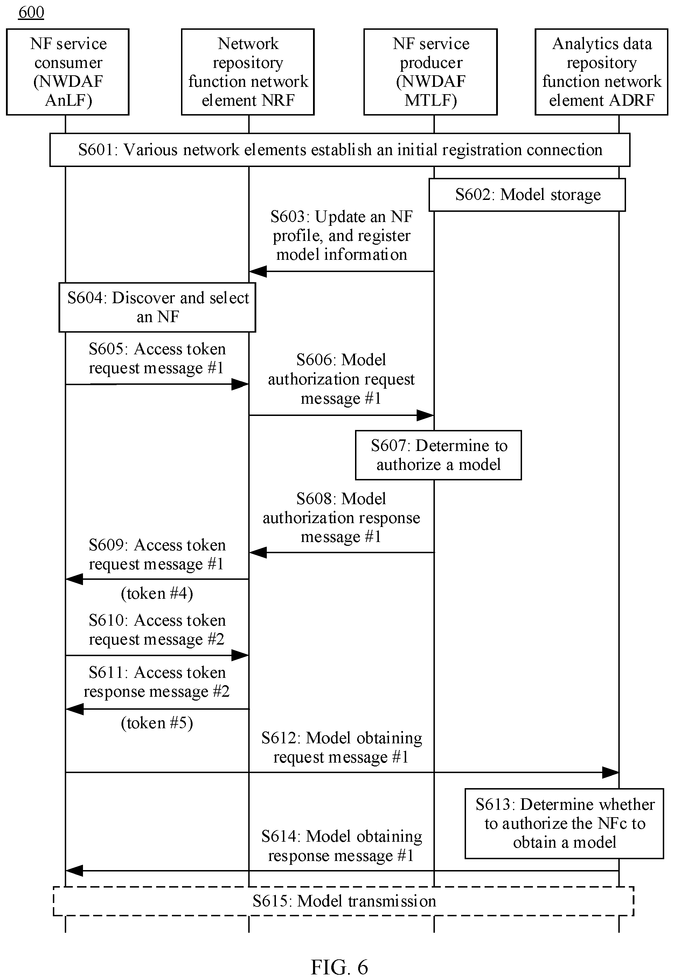

FIG. 6 is a schematic flowchart of another communication method 600 according to an embodiment of this application.

S601: Various network elements establish an initial registration connection.

For example, in step S601, an NWDAF including an MTLF registers an NFp profile Profile of the NWDAF with an NRF, and the profile includes an interoperability identifier supported by the NWDAF of the MTLF.

S602: An NFp and an ADRF complete model storage.

The NFp (for example, NWDAF _MTLF) needs to first send a model storage request to the ADRF, where the model storage request includes MTLF model indication information (ML Model Identifier), used to identify a model.

After the ADRF determines that the model requested by the NFp is stored, the NFp and the ADRF complete a model transmission procedure, and then the ADRF sends, to the NFp, a model storage response message including a storage address of the model, where the storage address of the model is a URL or an FQDN.

Optionally, the NFp further stores model-related information in the ADRF, for example, an analytics ID, an application ID of the model, the interoperability identifier, and other information.

S603: The NFp updates the NF profile to the NRF, and registers model-related information.

For example, the NFp and the ADRF register the stored model with the NRF. For example, the NFp and the ADRF register an NFp ID of a vendor corresponding to the stored model, an interoperability identifier of the NFp, and the analytics ID (Analytics ID), where the analytics ID indicates that the model of the application indicated by the analytics ID is stored.

S604: An NFc discovers and selects, via the NRF, an NF for requesting a model.

For example, the NFc (for example, the NWDAF including the AnLF) performs an NF discovery request operation by using the requested analytics ID, to select an appropriate NFp (for example, the NWDAF including the MTLF, or the ADRF).

S605: The NFc sends an access token request message #1 to the NRF.

Correspondingly, the NRF receives the access token request message #1 from the NFc.

The access token request message #1 is used to request to obtain an access token. For example, the access token request message #1 includes a target NF ID (for example, an ID of the NWDAF including the MTLF and an ADRF ID) and/or an NF type (for example, the NFp (the NWDAF including the MTLF and the ADRF)), and an analytics ID that the NFc expects to access.

Optionally, the access token request message #1 includes an NFc ID.

Optionally, the access token request message #1 includes indication information #1, indicating a vendor of an NFp corresponding to a model that the NFc expects to obtain, or vendor information of an NWDAF of an ML model that the NFc supports interoperability (for example, an interoperability identifier of the NFc). For example, the vendor information may be a vendor ID. It should be understood that the vendor information of the model that the NFc expects to obtain is equivalent to vendor information of a model producer network element NWDAF corresponding to the model that the NFc expects to obtain. It should be noted that the NFc expects to obtain a model produced by a vendor indicated by the vendor information.

It should be understood that a name of the indication information #1 is not limited in this embodiment of this application provided that the foregoing function can be implemented.

Optionally, the access token request message #1 includes a vendor ID of the NFc.

Optionally, the access token request message #1 includes the interoperability ID of the NFc, and the interoperability ID of the NFc is pre-allocated by a vendor of the NFc. The interoperability ID is consistent with identification information that indicates the vendor and that is in the interoperability identifier of the NFp produced by the vendor. For example, an interoperability ID of an NFc #1 produced by a vendor #1 is an ID #1, interoperability identifiers of an NFp #1 produced by the vendor #1 are the ID #1 and an ID #2, and an interoperability identifier of an NFp#2 produced by a vendor #2 is the ID #2. In this case, the NFc #1 can obtain only a model produced by the NFp #1, but cannot obtain a model produced by the NFp #2.

Optionally, the access token request message #1 includes model filter information (ML Model Filter information). For example, the model filter information includes S-NSSAI(s) slice information, an Area(s) of Interest area of interest, and the like.

For example, the access token request message #1 may be an Nnrf_AccessToken_Get Request message.

S606: The NRF sends a model authorization request message #1 to the NFp.

Correspondingly, the NFp receives the model authorization request message #1 from the NRF.

It should be understood that, before the NRF performs step S606, the NRF needs to determine whether a parameter in the access token request message #1 is consistent with information stored in an NF profile and a public key certificate stored in the NRF.

Further, the NRF needs to determine the analytics ID that the NFc expects to access, and determine, in a NFp profile stored in a local configuration, a target NFp to which the NRF sends the model authorization request message #1.

Specifically, the NRF determines, based on an analytics ID supported by each NFp in the NFp profile, one or more NFps corresponding to the analytics ID that the NFc expects to access.

Optionally, the NRF determines the vendor ID of the NFc and the interoperability identifier of the NFp in the NFp profile, and determines whether the vendor ID of the NWDAF including the AnLF is in the interoperability identifier of the NWDAF including the MTLF, to further determine the NFp that can be accessed by the NFc from the plurality of NFps determined based on the analytics ID.

Optionally, the NRF determines the interoperability ID of the NFc and the interoperability identifier of the NFp in the NFp profile, and determines whether the interoperability ID of the NWDAF including the AnLF is in the interoperability identifier of the NWDAF including the MTLF, to further determine the NFp that can be accessed by the NFc from the plurality of NFps determined based on the analytics ID.

Optionally, the NRF determines, based on an analytics ID supported by each ADRF in the ADRF profile, one or more NFps corresponding to the analytics ID that the NFc expects to access.

Optionally, the NRF determines the indication information #1 of the NFc and the vendor ID of the NFp in the NFp profile, and determines whether the indication information #1 of the NWDAF including the AnLF includes the vendor ID of the NWDAF of the MTLF, to further determine the NFp that can be accessed by the NFc from the plurality of NFps determined based on the analytics ID.

By way of example and not limitation, the NRF determines, based on the vendor information indicated in the indication information #1 of the NFc and the vendor ID of the NFp in the NF profile stored in the local configuration, that the vendor ID is included in the indication information #1. For example, the indication information #1 includes a vendor #1, a vendor #2, and a vendor #3, and the NF profile of the NFp stored in the NRF includes an NFp #1 whose vendor is the vendor #1 and an NFp #2 whose vendor is the vendor #2, the NRF selects the NFp #1 and the NFp #2 as candidate NFps.

By way of example and not limitation, the NRF determines, based on an analytics ID #1 in the NFp profile stored in the local configuration, the NFp #1, the NFp #2, and an NFp #3 that correspond to the analytics ID #1, and the NRF further selects, based on a vendor ID and an interoperability identifier of an NFc #1 with reference to interoperability identifiers and vendor IDs of the NFp #1, the NFp #2, and the NFp #3, the NFp #1 that can provide a model corresponding to the analytics ID #1 for the NFc #1 from the NFp #1, the NFp #2, and the NFp #3.

It should be understood that the NRF sends the model authorization request message #1 to the selected NFp only when the verification succeeds. The model authorization request message #1 includes the analytics ID.

Optionally, the model authorization request message #1 includes the NFc ID and/or the vendor ID of the NFc.

Optionally, the model authorization request message #1 includes the interoperability ID of the NFc. The interoperability ID is consistent with identification information that indicates the vendor and that is in the interoperability identifier of the NFp produced by the vendor. For example, the interoperability ID of the NFc #1 produced by the vendor #1 is the ID #1, the interoperability identifiers of the NFp #1 produced by the vendor #1 are the ID #1 and the ID #2, and the interoperability identifier of the NFp#2 produced by the vendor #2 is the ID #2. In this case, the NFc #1 can obtain only the model produced by the NFp #1, but cannot obtain the model produced by the NFp #2.

Optionally, the model authorization request message #1 includes the indication information #1.

Optionally, the model authorization request message #1 further includes the ADRF ID. It should be understood that the ADRF ID included in the model authorization request message #1 can be the same as or different from the ADRF ID included in the access token request message #1.

Optionally, the model authorization request message #1 further includes the model filter information included in the access token request message #1.

### Case 1

The NRF requests, by using the model authorization request message #1, the NFp to agree to authorize the NFc to obtain the model.

S607: The NFp determines to authorize the model.

It should be understood that the NFp needs to determine, with reference to a local policy based on the NFc information included by the NRF in the model authorization request message #1, whether to agree to authorize the NFc to obtain the model.

For example, the NFp verifies that the analytics ID included in the model authorization request message #1 belongs to a service capability scope of the NFp.

For example, the NFp verifies that the vendor ID of the NFc included in the model authorization request message #1 is in the interoperability identifier of the NFp.

For example, the NFp verifies that the interoperability ID of the NFc included in the model authorization request message #1 is in the interoperability identifier of the NFp.

S608: The NFp sends a model authorization response message #1 to the NRF.

Correspondingly, the NRF receives the model authorization response message #1 from the NFp.

In a possible implementation, the model authorization response message #1 includes an identifier indicating that the NRF is agreed to authorize the NFc to obtain the target model.

In another possible implementation, the model authorization response message #1 includes the analytics ID that the NFc is authorized to obtain. For example, the NFc is authorized to access the model corresponding to the analytics ID.

In another possible implementation, the model authorization response message #1 includes an identifier indicating that the NRF is agreed to authorize the NFc to obtain the target model and the analytics ID that the NFc is authorized to access.

Optionally, the model authorization response message #1 further includes a validity period of the authorization.

Optionally, the model authorization response message #1 further includes the NFp ID.

S609: The NRF sends an access token response message #1 to the NFc.

Correspondingly, the NFc receives the access token response message #1 from the NRF.

The access token response message #1 includes a token #4. It should be understood that the NRF generates the token #4 based on content of the local configuration.

In a possible implementation, the token #4 includes expiration time of the token #4 and the analytics ID of the model that the NFc is authorized to obtain.

In another possible implementation, the token #4 includes expiration time of the token #4, the analytics ID of the model that the NFc is authorized to obtain, and the interoperability identifier of the model that the NFc is authorized to access.

In another possible implementation, the token #4 includes expiration time of the token #4, the analytics ID of the model that the NFc is authorized to obtain, and the vendor ID(s) of the model that the NFc is authorized to access.

In another possible implementation, the token #4 includes expiration time of the token #4, the analytics ID of the model that the NFc is authorized to obtain, the interoperability identifier of the model that the NFc is authorized to access, and the NFp ID(s).

### Case 2

The NRF requests detailed authorization information from the NFp by using the model authorization request message #1. By way of example and not limitation, the NRF requests a specific status of model authorization from the NFp by using the model authorization request message #1, including specific authorization model indication information, authorization time, and the like.

### Manner 1

S607: The NFp determines to authorize the model.

It should be understood that the NFp needs to determine, with reference to a local policy based on the NFc information included by the NRF in the model authorization request message #1, whether to agree to authorize the NFc to obtain the model.

For example, the NFp verifies that the analytics ID included in the model authorization request message #1 belongs to a service capability scope of the NFp.

For example, the NFp verifies that the vendor ID of the NFc included in the model authorization request message #1 is in the interoperability identifier of the NFp.

For example, the NFp verifies that the interoperability ID of the NFc included in the model authorization request message #1 is in the interoperability identifier of the NFp.

Further, the NFp determines, with reference to the local policy, to authorize a specific model to the NFc, to return detailed authorization information to the NRF.

For example, the NFp determines, based on the analytics ID included in the model authorization request message #1, the specific model authorized to the NFc.

Optionally, when the model authorization request message #1 includes the model filter information, the NFp further selects an appropriate model based on the model filter information.

In a possible implementation, the NFp requests, from the ADRF, the address of the model that the NFc is authorized to obtain, to obtain a new model address and add the new model address to the detailed authorization information.

S608: The NFp sends a model authorization response message #1 to the NRF.

Correspondingly, the NRF receives the model authorization response message #1 from the NFp.

It should be understood that the NFp generates the model authorization response message #1 based on the detailed authorization information determined in S607.

In a possible implementation, the model authorization response message #1 includes an indication indicating that the NRF is agreed to authorize the NFc to obtain the analytics ID.

In another possible implementation, the model authorization response message #1 includes an identifier indicating that the NRF is agreed to authorize the NFc to obtain the target model.

In another possible implementation, the model authorization response message #1 includes an identifier indicating that the NRF is agreed to authorize the NFc to obtain the target model and the NFp ID.

In still another possible implementation, the model authorization information response message #1 includes an identifier indicating that the NRF is agreed to authorize the NFc to obtain the target model and the ADRF ID corresponding to the target model.

In still another possible implementation, the model authorization information response message #1 includes an identifier indicating that the NRF is agreed to authorize the NFc to obtain the target model and the model indication information of the target model. By way of example and not limitation, the model indication information includes one or more of a model identifier (ML Model Identifier), a model address (Address of Model file), or a hash value of a model address (Hash of Address of Model file). The model address may be a URL or an FQDN. Correspondingly, the hash value of the model address may be a hash value of a URL or an FQDN.

In still another possible implementation, the model authorization information response message #1 includes an identifier indicating that the NRF is agreed to authorize the NFc to obtain the target model, authorization expiration time, the model indication information of the target model, and the ADRF ID corresponding to the target model.

In the foregoing implementations, optionally, the model authorization response message #1 further includes the authorization expiration time in which the NFp authorizes the NFc to obtain the model.

In the foregoing implementations, optionally, the model authorization response message #1 further includes the analytics ID that the NFc is authorized to access, and indicates that the NFc is authorized to obtain the model corresponding to the analytics ID(s) generated by the NFp.

It should be noted that the model address included in the model authorization response message #1 may be the address of the model stored by the NFp in step S602, or may be the address of the model obtained by requesting from the ADRF in S611. This is not limited in this embodiment of this application.

S609: The NRF sends an access token response message #1 to the NFc.

Correspondingly, the NFc receives the access token response message #1 from the NRF.

The access token response message #1 includes a token #4.

It should be understood that the NRF generates the token #4 based on the local configuration and content of the model authorization response message #1.

In a possible implementation, the token #4 includes expiration time of the token #4 and the analytics ID of the model that the NFc is authorized to obtain.

In another possible implementation, the token #4 includes expiration time of the token #4, the analytics ID of the model that the NFc is authorized to obtain, and the interoperability identifier of the model that the NFc is authorized to access.

In another possible implementation, the token #4 includes expiration time of the token #4, the analytics ID of the model that the NFc is authorized to obtain, and the vendor ID of the model that the NFc is authorized to access.

In another possible implementation, the token #4 includes expiration time of the token #4, the analytics ID of the model that the NFc is authorized to obtain, the interoperability identifier of the model that the NFc is authorized to access, and the NFp ID(s).

In another possible implementation, the token #4 includes expiration time of the token #4, the analytics ID of the model that the NFc is authorized to obtain, and the NFp ID(s) of the model that the NFc is authorized to access.

In another possible implementation, the token #4 includes expiration time of the token #4, the analytics ID of the model that the NFc is authorized to obtain, the interoperability identifier of the model that the NFc is authorized to access, the NFp ID(s), and the model indication information of the model that the NFc is authorized to obtain. Optionally, the token #4 further includes the vendor ID of the NFc.

### Manner 2

S607: The NFp determines to authorize the model.

It should be understood that the NFp needs to determine, with reference to a local policy based on the NFc information included by the NRF in the model authorization request message #1, whether to agree to authorize the NFc to obtain the model.

For example, the NFp verifies that the analytics ID included in the model authorization request message #1 belongs to a service capability scope of the NFp.

For example, the NFp verifies that the vendor ID of the NFc included in the model authorization request message #1 is in the interoperability identifier of the NFp.

For example, the NFp verifies that the interoperability ID of the NFc included in the model authorization request message #1 is in the interoperability identifier of the NFp.

Further, the NFp determines, with reference to the model authorization request message #1 and the local policy, to authorize a specific model to the NFc, and further generates a model authorization token #2. For example, the model authorization token may be a CCA. This is not limited in this embodiment of this application provided that a corresponding function can be implemented.

In a possible implementation, the model authorization token #2 generated by the NFp includes the NFp ID, the NFc ID, expiration time of the model authorization token #2, and the analytics ID of the model that the NFc is authorized to obtain.

In another possible implementation, the model authorization token #2 generated by the NFp includes the NFp ID, the NFc ID, expiration time of the model authorization token #2, and the model indication information of the model that the NFc is authorized to obtain. By way of example and not limitation, the model indication information includes one or more of a model identifier (ML Model Identifier), a model address (Address of Model file), or a hash value of a model address (Hash of Address of Model file). The model address may be a URL or an FQDN. Correspondingly, the hash value of the model address may be a hash value of a URL or an FQDN.

In still another possible implementation, the model authorization token #2 generated by the NFp includes the NFp ID, the NFc ID, expiration time of the model authorization token #2, the analytics ID of the model that the NFc is authorized to obtain, and an ADRF ID or an ADRF type of the model.

In still another possible implementation, the model authorization token #2 generated by the NFp includes the NFp ID, the NFc ID, expiration time of the model authorization token #2, the analytics ID of the model that the NFc is authorized to obtain, and the model indication information of the model.

In still another possible implementation, the model authorization token #2 generated by the NFp includes the NFp ID, the NFc ID, expiration time of the model authorization token #2, the model indication information of the model that the NFc is authorized to obtain, and an ADRF ID or an ADRF type of the model.

In still another possible implementation, the model authorization token #2 generated by the NFp includes the NFp ID, the NFc ID, expiration time of the model authorization token #2, the analytics ID of the model that the NFc is authorized to obtain, the model indication information of the model, and an ADRF ID or an ADRF type of the model.

S608: The NFp sends a model authorization response message #1 to the NRF.

Correspondingly, the NRF receives the model authorization response message #1 from the NFp.

The model authorization response message #1 includes the model authorization token #2 generated by the NFp.

Optionally, the model authorization response message #1 further includes authorization information in the model authorization token #2.

Optionally, the model authorization response message #1 further includes an identifier indicating that the NFp authorizes the NFc to obtain the model.

Optionally, the model authorization response message #1 further includes the NFp ID.

S609: The NRF sends an access token response message #1 to the NFc.

Correspondingly, the NRF receives the access token response message #1 from the NFc.

In a possible implementation, the access token response message #1 includes the token #4.

It should be understood that the NRF generates the token #4 based on the local configuration and content of the model authorization token #2.

For example, the token #4 includes the expiration time of the token #4 and the analytics ID of the model that the NFc is authorized to obtain.

For example, the token #4 includes the expiration time of the token #4, the analytics ID of the model that the NFc is authorized to obtain, and the interoperability identifier of the model that the NFc is authorized to access.

For example, the token #4 includes the expiration time of the token #4, the analytics ID of the model that the NFc is authorized to obtain, the interoperability identifier of the model that the NFc is authorized to access, and the NFp ID(s).

For example, the token #4 includes the expiration time of the token #4, the analytics ID of the model that the NFc is authorized to obtain, the interoperability identifier of the model that the NFc is authorized to access, the NFp ID(s), and the model indication information of the model that the NFc is authorized to obtain.

For example, the token #4 includes the expiration time of the token #4 and the model indication information of the model that the NFc is authorized to obtain.

Optionally, the token #4 further includes the vendor ID of the NFc.

Optionally, the token #4 further includes the interoperability ID of the NFc.

In another possible implementation, the access token response message #1 includes the token #4 and the model authorization token #2.

It should be understood that the NRF generates the token #4 based on the local configuration.

For example, the token #4 includes the expiration time of the token #4 and the analytics ID of the model that the NFc is authorized to obtain.

For example, the token #4 includes the expiration time of the token #4, the analytics ID of the model that the NFc is authorized to obtain, and the interoperability identifier of the model that the NFc is authorized to access.

For example, the token #4 includes the expiration time of the token #4, the analytics ID of the model that the NFc is authorized to obtain, the interoperability identifier of the model that the NFc is authorized to access, and the NFp ID(s).

Optionally, the token #4 further includes the vendor ID of the NFc.

Optionally, the token #4 further includes the interoperability ID of the NFc.

In still another possible implementation, the access token response message #1 includes the token #4, the model authorization token #2, and information in the model authorization token.

In this implementation, before performing step S609, the NRF reads the authorization information in the model authorization token #2, or the NRF includes the authorization information in the model authorization token #2 in the model authorization response message #1 based on the authorization information carried in the model authorization response message #1.

It should be understood that the NRF generates the token #4 based on the local configuration.

For example, the token #4 includes the expiration time of the token #4 and the analytics ID of the model that the NFc is authorized to obtain.

For example, the token #4 includes the expiration time of the token #4, the analytics ID of the model that the NFc is authorized to obtain, and the interoperability identifier of the model that the NFc is authorized to access.

For example, the token #4 includes the expiration time of the token #4, the analytics ID of the model that the NFc is authorized to obtain, the interoperability identifier of the model that the NFc is authorized to access, and the NFp ID(s).

Optionally, the token #4 further includes the vendor ID of the NFc.

Optionally, the token #4 further includes the interoperability ID of the NFc.

It should be understood that the NFc obtains the token #4 by using the foregoing step S607 to step S609.

S610: Optionally, the NFc sends an access authorization token request message #2 to the NRF.

Correspondingly, the NFc receives the access authorization token response message #2 from the NRF.

The access authorization token response message #2 is used to request to access the ADRF in which the target model is located.

It should be understood that the NFc can determine, via the NRF or the NFp, the ADRF in which the target model is located.

S611: Optionally, the NRF sends an access authorization token response message #2 to the NFc.

Correspondingly, the NRF receives the access authorization token response message #2 from the NFc.

The access authorization token response message #3 includes the token #5.

For specific implementations of steps S610 and S611, refer to steps S407 and S408 in the method 400. For example, before performing step S611, the NRF needs to check whether the NWDAF including the AnLF is authorized to access the ADRF. The NRF generates the token #5 only when the verification succeeds, and then performs step S611. Details are not described herein.

S612: The NFc sends a model obtaining request message #1 to the ADRF.

The model obtaining request message #1 includes the analytics ID.

Optionally, the model obtaining request message #1 further includes the ID of the model that the NFc requests to access.

Optionally, the model obtaining request message #1 further includes the indication information #1 of the NFc.

Correspondingly, the ADRF receives the model obtaining request message #1 from the NFc.

In a possible implementation, the model obtaining request message #1 includes the analytics ID of the model that the NFc requests to obtain and the token #4.

In another possible implementation, the model obtaining request message #1 includes the analytics ID of the model that the NFc requests to obtain, the token #4, and the model authorization token #2.

Optionally, the model obtaining request message #1 further includes the model ID of the model that the NFc requests to obtain.

Optionally, the model obtaining request message #1 further includes the token #5.

Optionally, the model obtaining request message #1 further includes a random number generated by the NFc, so that the ADRF can generate a ticket based on the random number in a subsequent step, to bind the NFc ID and model address information #1, to ensure that only a specific NFc can obtain the model based on the model address information #1.

S613: The ADRF verifies whether to authorize the NFc to obtain the model.

For example, the ADRF verifies, based on the expiration time of the token #4, whether the token #4 is within a validity period, and the ADRF verifies that the NFc ID for sending the model obtaining request message #1 is consistent with the NFc ID in the token #4.

Optionally, when the token #4 includes the ADRF ID, the ADRF verifies that the ADRF ID in the token #4 is consistent with the NF ID of the ADRF.

Optionally, when the token #4 includes the NFp ID and the ML model indication information, the ADRF verifies a relationship between the NFp ID in the token #4 and the model indicated by the model indication information, and determines that the NFp actually has authorization permission for the model.

It should be understood that, after the verification in the foregoing example succeeds, the ADRF returns the model address information #1 (for example, an address of model file2) to the NFc based on information about the token #4 and local configuration information, so that the NFc obtains the model.

In a possible implementation, the ADRF may use the ticket as a model obtaining credential, and bind the NFc ID and model address information #2, to ensure that only the specific NFc can obtain the model based on the model address information #2.

Further, the ADRF notifies content of the ticket to a third-party storage address.

By way of example and not limitation, the content of the ticket may be [token #4, MAC of the token #4, random number provided by the NFc (carried when the NFc sends the model request), and random number generated by the NFp].

Correspondingly, in this implementation, the model obtaining response message #1 further includes the ticket.

Optionally, the ticket is included in the model address information #2.

S614: The ADRF sends a model obtaining response message #1 to the NFc.

Correspondingly, the NFc receives the model obtaining response message #1 from the ADRF.

The model obtaining response message #1 includes the model address information #2.

S615: The NFc and the ADRF perform model transmission.

The NFc obtains the target model based on the model address information #2.

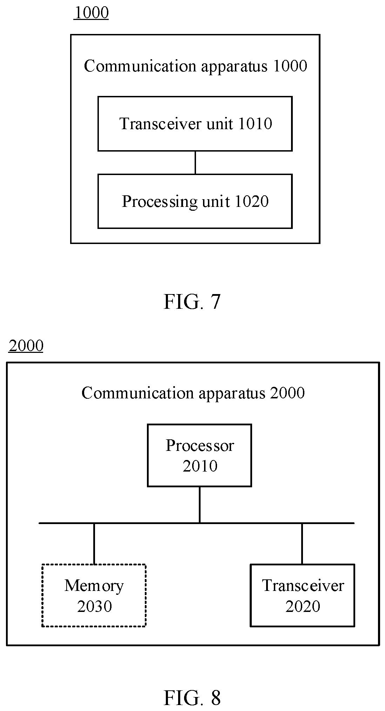

FIG. 7 is a diagram of a communication apparatus 1000 according to an embodiment of this application. As shown in FIG. 7, the device 1000 may include a transceiver unit 1010 and a processing unit 1020. The transceiver unit 1010 may communicate with the outside, and the processing unit 1020 is configured to process data. The transceiver unit 1010 may also be referred to as a communication interface or a transceiver unit.

In a possible design, the device 1000 may implement the steps or procedures performed by the NFc in the foregoing method embodiments. The processing unit 1020 is configured to perform processing-related operations of the NFc in the foregoing method embodiments. The transceiver unit 1010 is configured to perform sending and receiving-related operations of the NFc in the foregoing method embodiments.

In another possible design, the device 1000 may implement the steps or procedures performed by the NFp in the foregoing method embodiments. The transceiver unit 1010 is configured to perform sending and receiving-related operations of the NFp in the foregoing method embodiments. The processing unit 1020 is configured to perform processing-related operations of the NFp in the foregoing method embodiments.

In still another possible design, the device 1000 may implement the steps or procedures performed by the NRF in the foregoing method embodiments. The transceiver unit 1010 is configured to perform sending and receiving-related operations of the NRF in the foregoing method embodiments. The processing unit 1020 is configured to perform processing-related operations of the NRF in the foregoing method embodiments.

In yet another possible design, the device 1000 may implement the steps or procedures performed by the ADRF in the foregoing method embodiments. The transceiver unit 1010 is configured to perform sending and receiving-related operations of the ADRF in the foregoing method embodiments. The processing unit 1020 is configured to perform processing-related operations of the ADRF in the foregoing method embodiments.

It should be understood that the device 1000 herein is implemented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art can understand that the device 1000 may be specifically a transmit end in the foregoing embodiments, and may be configured to perform procedures and/or steps corresponding to the transmit end in the foregoing method embodiments; or the device 1000 may be specifically a receive end in the foregoing embodiments, and may be configured to perform procedures and/or steps corresponding to the receive end in the foregoing method embodiments. To avoid repetition, details are not described herein again.

The device 1000 in the foregoing solutions has a function of implementing corresponding steps performed by the transmit end in the foregoing methods. Alternatively, the device 1000 in the foregoing solutions has a function of implementing corresponding steps performed by the receive end in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform receiving and sending operations and a related processing operation in the method embodiments.

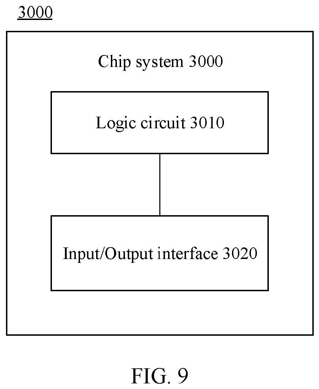

In addition, the transceiver unit may alternatively be a transceiver circuit (for example, may include a receiving circuit and a sending circuit), and the processing unit may be a processing circuit. In this embodiment of this application, the apparatus in FIG. 9 may be the receive end or the transmit end in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 8 is a diagram of another communication apparatus 2000 according to an embodiment of this application. As shown in FIG. 8, the device 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the device 2000 may further include a memory 2030. The memory 2030 communicates with the processor 2010 and the transceiver 2020 through the internal connection path. The memory 2030 is configured to store instructions, and the processor 2010 may execute the instructions stored in the memory 2030.

In a possible implementation, the device 2000 is configured to implement the procedures and the steps corresponding to the NFc in the foregoing method embodiments.

In another possible implementation, the device 2000 is configured to implement the procedures and the steps corresponding to the NFp in the foregoing method embodiments.

In still another possible implementation, the device 2000 is configured to implement the procedures and steps corresponding to the NRF in the foregoing method embodiments.

In yet another possible implementation, the device 2000 is configured to implement the procedures and the steps corresponding to the ADRF in the foregoing method embodiments.

It should be understood that the device 2000 may be specifically a transmit end or a receive end in the foregoing embodiments, or may be a chip or a chip system. Correspondingly, the transceiver 2020 may be a transceiver circuit of the chip. This is not limited herein. Specifically, the device 2000 may be configured to perform the steps and/or the procedures corresponding to the transmit end or the receive end in the foregoing method embodiments.

Optionally, the memory 2030 may include a read-only memory and a random access memory, and provide instructions and data to the processor. A part of the memory may further include a non-volatile random access memory. For example, the memory may further store information of a device type. The processor 2010 may be configured to execute the instructions stored in the memory. When the processor 2010 executes the instructions stored in the memory, the processor 2010 is configured to perform steps and/or procedures in the foregoing method embodiments corresponding to the transmit end or the receive end.

In an implementation process, steps in the foregoing methods may be implemented by a hardware integrated logic circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments may be implemented by a hardware integrated logic circuit in the processor, or by using instructions in a form of software. The processor may be a general-purpose processor, a digital signal processor, an application-specific integrated circuit, a field programmable gate array or another programmable logic device, a discrete gate or transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps of the method disclosed with reference to embodiments of this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. For example but not for limitation, many forms of RAMs are available, for example, a static random access memory, a dynamic random access memory, a synchronous dynamic random access memory, a double data rate synchronous dynamic random access memory, an enhanced synchronous dynamic random access memory, a synchlink dynamic random access memory, and a direct rambus random access memory. It should be noted that the memory in the system and the method described in this specification is intended to include, but not limited to, these memories and any memory of another proper type.

FIG. 9 is a diagram of a chip system 3000 according to an embodiment of this application. The chip system 3000 (may also be referred to as a processing system) includes a logic circuit 3010 and an input/output interface (input/output interface) 3020.

The logic circuit 3010 may be a processing circuit in the chip system 3000. The logic circuit 3010 may be coupled to a storage unit, and invoke instructions in the storage unit, so that the chip system 3000 can implement the methods and functions in embodiments of this application. The input/output interface 3020 may be an input/output circuit in the chip system 3000, and outputs information processed by the chip system 3000, or inputs to-be-processed data or signaling information to the chip system 3000 for processing.

In a solution, the chip system 3000 is configured to implement operations performed by the NFc in the foregoing method embodiments. For example, the logic circuit 3010 is configured to implement processing-related operations performed by the NFc in the foregoing method embodiments. The input/output interface 3020 is configured to implement sending and/or receiving-related operations performed by the NFc in the foregoing method embodiments.

In another solution, the chip system 3000 is configured to implement operations performed by the NFp in the foregoing method embodiments. For example, the logic circuit 3010 is configured to implement processing-related operations performed by the NFp in the foregoing method embodiments. The input/output interface 3020 is configured to implement sending and/or receiving-related operations performed by the NFp in the foregoing method embodiments.

In still another solution, the chip system 3000 is configured to implement operations performed by the ADRF in the foregoing method embodiments. For example, the logic circuit 3010 is configured to implement processing-related operations performed by the ADRF in the foregoing method embodiments. The input/output interface 3020 is configured to implement sending and/or receiving-related operations performed by the ADRF in the foregoing method embodiments.

In yet another solution, the chip system 3000 is configured to implement operations performed by the NRF in the foregoing method embodiments. For example, the logic circuit 3010 is configured to implement processing-related operations performed by the NRF in the foregoing method embodiments. The input/output interface 3020 is configured to implement sending and/or receiving-related operations performed by the NRF in the foregoing method embodiments.

An embodiment of this application further provides a computer-readable storage medium. The computer-readable storage medium stores computer instructions used to implement the method performed by the device (for example, the NFc, the NFp, the ADRF, or the NRF) in the foregoing method embodiments.

An embodiment of this application further provides a computer program product, including instructions. When the instructions are executed by a computer, the method performed by the device (for example, the NFc, the NFp, the ADRF, or the NRF) in the foregoing method embodiments is implemented.

An embodiment of this application further provides a communication system, including one or more of the NFc, the NFp, the ADRF, the NRF, or the like.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a network repository function network element, a first request message from a first network function, wherein the first request message is used to request to authorize the first network function to obtain a model;
sending, by the network repository function network element, a second request message to a model producer network element based on the first request message, wherein the second request message is used to request to determine whether to authorize the first network function to obtain the model;
receiving, by the network repository function network element, a second response message from the model producer network element, and generating a first access token based on the second response message, wherein the second response message indicates that the first network function is authorized to obtain the model, and the first access token indicates that the first network function is authorized to obtain the model; and
sending, by the network repository function network element, a first response message to the first network function, wherein the first response message comprises the first access token.

2. The method according to claim 1, wherein the first request message comprises an analytics identifier, and the analytics identifier indicates a type of the model.

3. The method according to claim 2, wherein before sending, by the network repository function network element, the second request message to the model producer network element based on the first request message, the method further comprises:
determining, by the network repository function network element, the model producer network element based on the analytics identifier and an analytics identifier that corresponds to at least one model producer network element and is stored in the network repository function network element.

4. The method according to claim 3, wherein determining, by the network repository function network element, the model producer network element based on the analytics identifier and the analytics identifier that corresponds to the at least one model producer network element and is stored in the network repository function network element comprises:
determining, by the network repository function network element, the model producer network element based on the analytics identifier, the analytics identifier that corresponds to the at least one model producer network element and is stored in the network repository function network element, a vendor identifier of the first network function, and an interoperability identifier of the at least one model producer network element stored in the network repository function network element, wherein the interoperability identifier of the at least one model producer network element indicates a vendor of a network function that is allowed to obtain a model from the at least one model producer network element.

5. The method according to claim 4, wherein determining, by the network repository function network element, the model producer network element based on the analytics identifier, the analytics identifier that corresponds to the at least one model producer network element and is stored in the network repository function network element, the vendor identifier of the first network function, and the interoperability identifier of the at least one model producer network element stored in the network repository function network element comprises:
determining, by the network repository function network element, at least two candidate model producer network elements based on the analytics identifier in the first request message and the analytics identifier corresponding to the at least one model producer network element; and
determining, by the network repository function network element, the model producer network element from the at least two candidate model producer network elements based on the vendor identifier of the first network function and the interoperability identifier of the at least one model producer network element stored in the network repository function network element.

6. The method according to claim 3, wherein the first request message further comprises a first identifier, and the first identifier indicates a vendor of a model producer network element corresponding to a model that the first network function expects to obtain; and
determining, by the network repository function network element, the model producer network element based on the analytics identifier and the analytics identifier that corresponds to the at least one model producer network element and is stored in the network repository function network element comprises:
determining, by the network repository function network element, the model producer network element based on the analytics identifier, the analytics identifier that corresponds to the at least one model producer network element and is stored in the network repository function network element, a vendor identifier of the first network function, an interoperability identifier of the at least one model producer network element stored in the network repository function network element, the first identifier, and a vendor identifier of the at least one model producer network element stored in the network repository function network element, wherein the interoperability identifier of the at least one model producer network element indicates a vendor of a network function that is allowed to obtain a model from the at least one model producer network element.

7. The method according to any one of claims 1 to 6, wherein the second request message comprises at least one of the following:
an analytics identifier, and the analytics identifier indicates a type of the model; or
a vendor identifier of the first network function and/or an identifier of the first network function; optionally,
wherein the second response message comprises identification information of the model.

8. The method according to any one of claims 7, wherein the second response message further comprises a second access token, the second access token indicates that the first network function is authorized to obtain the model, and the second access token comprises the identifier of the first network function, an identifier of the model producer network element, and the analytics identifier and/or the identification information of the model; optionally,
the first response message further comprises the second access token.

9. The method according to any one of claims 1 to 8, wherein the first access token comprises at least one of the following:
an analytics identifier, and the analytics identifier indicates a type of the model; or
a first identifier, and the first identifier indicates a vendor type of a model producer network element of a model that the first network function is authorized to obtain; or
identification information of the model.

10. A communication method, comprising:
receiving, by a model producer network element, a request message from a network repository function network element, wherein the request message is used to request to determine whether to authorize a first network function to obtain a model;
determining, by the model producer network element based on the request message, to authorize the first network function to obtain the model; and
sending, by the model producer network element, a response message to the network repository function network element, wherein the response message indicates that the first network function is authorized to obtain the model.

11. The method according to claim 10, wherein the request message comprises an analytics identifier, a vendor identifier of the first network function, and an identifier of the first network function, and the analytics identifier indicates a type of the model.

12. The method according to claim 11, wherein determining, by the model producer network element based on the request message, to authorize the first network function to obtain the model comprises:
determining, by the model producer network element, identification information of the model based on the analytics identifier; and
adding, by the model producer network element, the identification information of the model to the response message.

13. The method according to claim 11 or 12, wherein determining, by the model producer network element based on the request message, to authorize the first network function to obtain the model comprises:
generating, by the model producer network element, a second access token, wherein the second access token indicates that the first network function is authorized to obtain the model, and the second access token comprises the identifier of the first network function, an identifier of the model producer network element, and the analytics identifier and/or the identification information of the model; and
adding, by the model producer network element, the second access token to the response message.

14. A communication system, comprising a network repository function network element and a model producer network element, wherein
the network repository function network element is configured to perform the method according to any one of claims 1 to 9; and
the model producer network element is configured to perform the method according to any one of claims 10 to 13.

15. A communication apparatus, wherein the apparatus comprises a module configured to perform the method as the network repository function network element according to any one of claims 1 to 9, or a module configured to perform the method as the model producer network element according to any one of claims 10 to 13.

## Patentansprüche

1. Kommunikationsverfahren, umfassend:
Empfangen einer ersten Anforderungsnachricht von einer ersten Netzwerkfunktion durch ein Netzwerk-Repository-Funktionsnetzwerkelement, wobei die erste Anforderungsnachricht verwendet wird, um anzufordern, die erste Netzwerkfunktion zu autorisieren, ein Modell zu erlangen;
Senden einer zweiten Anforderungsnachricht an ein Modellproduzenten-Netzwerkelement basierend auf der ersten Anforderungsnachricht durch das Netzwerk-Repository-Funktionsnetzwerkelement, wobei die zweite Anforderungsnachricht verwendet wird, um anzufordern, zu bestimmen, ob die erste Netzwerkfunktion zum Erlangen des Modells autorisiert werden soll;
Empfangen einer zweiten Antwortnachricht von dem Modellproduzenten-Netzwerkelement durch das Netzwerk-Repository-Funktionsnetzwerkelement und Erzeugen eines ersten Zugriffstokens basierend auf der zweiten Antwortnachricht, wobei die zweite Antwortnachricht angibt, dass die erste Netzwerkfunktion autorisiert ist, das Modell zu erlangen, und das erste Zugriffstoken angibt, dass die erste Netzwerkfunktion autorisiert ist, das Modell zu erlangen; und
Senden einer ersten Antwortnachricht an die erste Netzwerkfunktion durch das Netzwerk-Repository-Funktionsnetzwerkelement, wobei die erste Antwortnachricht das erste Zugriffstoken umfasst.

2. Verfahren nach Anspruch 1, wobei die erste Anforderungsnachricht einen Analysebezeichner umfasst und der Analysebezeichner einen Typ des Modells angibt.

3. Verfahren nach Anspruch 2, wobei das Verfahren vor dem Senden der zweiten Anforderungsnachricht an das Modellproduzenten-Netzwerkelement durch das Netzwerk-Repository-Funktionsnetzwerkelement basierend auf der ersten Anforderungsnachricht ferner Folgendes umfasst:
Bestimmen des Modellproduzenten-Netzwerkelements basierend auf dem Analysebezeichner und einem Analysebezeichner, der mindestens einem Modellproduzenten-Netzwerkelement entspricht und in dem Netzwerk-Repository-Funktionsnetzwerkelement gespeichert ist, durch das Netzwerk-Repository-Funktionsnetzwerkelement.

4. Verfahren nach Anspruch 3, wobei das Bestimmen des Modellproduzenten-Netzwerkelements basierend auf dem Analysebezeichner und dem Analysebezeichner, der mindestens einem Modellproduzenten-Netzwerkelement entspricht und in dem Netzwerk-Repository-Funktionsnetzwerkelement gespeichert ist, durch das Netzwerk-Repository-Funktionsnetzwerkelement Folgendes umfasst:
Bestimmen des Modellproduzenten-Netzwerkelements basierend auf dem Analysebezeichner durch das Netzwerk-Repository-Funktionsnetzwerkelement, dem Analysebezeichner, der dem mindestens einen Modellproduzenten-Netzwerkelement entspricht und in dem Netzwerk-Repository-Funktionsnetzwerkelement gespeichert ist, einem Anbieterbezeichner der ersten Netzwerkfunktion und einem Interoperabilitätsbezeichner des mindestens einen Modellproduzenten-Netzwerkelements, der in dem Netzwerk-Repository-Funktionsnetzwerkelement gespeichert ist, wobei der Interoperabilitätsbezeichner des mindestens einen Modellproduzenten-Netzwerkelements einen Anbieter einer Netzwerkfunktion angibt, der berechtigt ist, ein Modell von dem mindestens einen Modellproduzenten-Netzwerkelement zu erlangen.

5. Verfahren nach Anspruch 4, wobei das Bestimmen des Modellproduzenten-Netzwerkelements basierend auf dem Analysebezeichner durch das Netzwerk-Repository-Funktionsnetzwerkelement, dem Analysebezeichner, der dem mindestens einen Modellproduzenten-Netzwerkelement entspricht und in dem Netzwerk-Repository-Funktionsnetzwerkelement gespeichert ist, dem Anbieterbezeichner der ersten Netzwerkfunktion und dem Interoperabilitätsbezeichner des mindestens einen Modellproduzenten-Netzwerkelements, der in dem Netzwerk-Repository-Funktionsnetzwerkelement gespeichert ist, Folgendes umfasst:
Bestimmen mindestens zweier Kandidatenmodellproduzenten-Netzwerkelemente basierend auf dem Analysebezeichner in der ersten Anforderungsnachricht und dem Analysebezeichner, der dem mindestens einen Modellproduzenten-Netzwerkelement entspricht, durch das Netzwerk-Repository-Funktionsnetzwerkelement; und
Bestimmen des Modellproduzenten-Netzwerkelements aus den mindestens zwei Kandidatenmodellproduzenten-Netzwerkelementen basierend auf dem Anbieterbezeichner der ersten Netzwerkfunktion und dem Interoperabilitätsbezeichner des mindestens einen Modellproduzenten-Netzwerkelements, das in dem Netzwerk-Repository-Funktionsnetzwerkelement gespeichert ist, durch das Netzwerk-Repository-Funktionsnetzwerkelement.

6. Verfahren nach Anspruch 3, wobei die erste Anforderungsnachricht ferner einen ersten Bezeichner umfasst und der erste Bezeichner einen Anbieter eines Modellproduzenten-Netzwerkelements angibt, das einem Modell entspricht, das die erste Netzwerkfunktion zu erlangen erwartet; und
das Bestimmen des Modellproduzenten-Netzwerkelements basierend auf dem Analysebezeichner und dem Analysebezeichner, der mindestens einem Modellproduzenten-Netzwerkelement entspricht und in dem Netzwerk-Repository-Funktionsnetzwerkelement gespeichert ist, durch das Netzwerk-Repository-Funktionsnetzwerkelement Folgendes umfasst:
Bestimmen des Modellproduzenten-Netzwerkelements basierend auf dem Analysebezeichner durch das Netzwerk-Repository-Funktionsnetzwerkelement, dem Analysebezeichner, der dem mindestens einen Modellproduzenten-Netzwerkelement entspricht und in dem Netzwerk-Repository-Funktionsnetzwerkelement gespeichert ist, einem Anbieterbezeichner der ersten Netzwerkfunktion, einem Interoperabilitätsbezeichner des mindestens einen Modellproduzenten-Netzwerkelements, das in dem Netzwerk-Repository-Funktionsnetzwerkelement gespeichert ist, dem ersten Bezeichner und einem Anbieterbezeichner des mindestens einen Modellproduzenten-Netzwerkelements, der in dem Netzwerk-Repository-Funktionsnetzwerkelement gespeichert ist, wobei der Interoperabilitätsbezeichner des mindestens einen Modellproduzenten-Netzwerkelements einen Anbieter einer Netzwerkfunktion angibt, der berechtigt ist, ein Modell von dem mindestens einen Modellproduzenten-Netzwerkelement zu erlangen.

7. Verfahren nach einem der Ansprüche 1 bis 6, wobei die zweite Anforderungsnachricht mindestens eines von Folgendem umfasst:
einen Analysebezeichner, wobei der Analysebezeichner einen Typ des Modells angibt; oder
einen Anbieterbezeichner der ersten Netzwerkfunktion und/oder einen Bezeichner der ersten Netzwerkfunktion; optional,
wobei die zweite Antwortnachricht Identifizierungsinformationen des Modells umfasst.

8. Verfahren nach einem der Ansprüche 7, wobei die zweite Antwortnachricht ferner ein zweites Zugriffstoken umfasst, wobei das zweite Zugriffstoken angibt, dass die erste Netzwerkfunktion autorisiert ist, das Modell zu erlangen, und das zweite Zugriffstoken den Bezeichner der ersten Netzwerkfunktion, einen Bezeichner des Modellproduzenten-Netzwerkelements und den Analysebezeichner und/oder die Identifizierungsinformationen des Modells umfasst; optional,
die erste Antwortnachricht ferner das zweite Zugriffstoken umfasst.

9. Verfahren nach einem der Ansprüche 1 bis 8, wobei das erste Zugriffstoken mindestens eines von Folgendem umfasst:
einen Analysebezeichner, wobei der Analysebezeichner einen Typ des Modells angibt; oder
einen ersten Bezeichner, wobei der erste Bezeichner einen Anbietertyp eines Modellproduzenten-Netzwerkelements eines Modells angibt, das die erste Netzwerkfunktion zu erlangen autorisiert ist; oder
Identifizierungsinformationen des Modells.

10. Kommunikationsverfahren, umfassend:
Empfangen einer Anforderungsnachricht von einem Netzwerk-Repository-Funktionsnetzwerkelement durch ein Modellproduzenten-Netzwerkelement, wobei die Anforderungsnachricht verwendet wird, um anzufordern, zu bestimmen, ob eine erste Netzwerkfunktion zum Erlangen eines Modells autorisiert werden soll;
Bestimmen durch das Modellproduzenten-Netzwerkelement basierend auf der Anforderungsnachricht, die erste Netzwerkfunktion zum Erlangen des Modells zu autorisieren; und
Senden einer Antwortnachricht an das Netzwerk-Repository-Funktionsnetzwerkelement durch das Modellproduzenten-Netzwerkelement, wobei die Antwortnachricht angibt, dass die erste Netzwerkfunktion autorisiert ist, das Modell zu erlangen.

11. Verfahren nach Anspruch 10, wobei die Anforderungsnachricht einen Analysebezeichner, einen Anbieterbezeichner der ersten Netzwerkfunktion und einen Bezeichner der ersten Netzwerkfunktion umfasst und der Analysebezeichner einen Typ des Modells angibt.

12. Verfahren nach Anspruch 11, wobei das Bestimmen durch das Modellproduzenten-Netzwerkelement basierend auf der Anforderungsnachricht, die erste Netzwerkfunktion zum Erlangen des Modells zu autorisieren, Folgendes umfasst:
Bestimmen von Identifizierungsinformationen des Modells basierend auf dem Analysebezeichner durch das Modellproduzenten-Netzwerkelement; und
Hinzufügen der Identifizierungsinformationen des Modells zu der Antwortnachricht durch das Modellproduzenten-Netzwerkelement.

13. Verfahren nach Anspruch 11 oder 12, wobei das Bestimmen durch das Modellproduzenten-Netzwerkelement basierend auf der Anforderungsnachricht, die erste Netzwerkfunktion zu autorisieren, das Modell zu erlangen, Folgendes umfasst:
Erzeugen eines zweiten Zugriffstokens durch das Modellproduzenten-Netzwerkelement, wobei das zweite Zugriffstoken angibt, dass die erste Netzwerkfunktion autorisiert ist, das Modell zu erlangen, und das zweite Zugriffstoken den Bezeichner der ersten Netzwerkfunktion, einen Bezeichner des Modellproduzenten-Netzwerkelements und den Analysebezeichner und/oder die Identifizierungsinformationen des Modells umfasst; und
Hinzufügen des zweiten Zugriffstokens zu der Antwortnachricht durch das Modellproduzenten-Netzwerkelement.

14. Kommunikationssystem, umfassend ein Netzwerk-Repository-Funktionsnetzwerkelement und ein Modellproduzenten-Netzwerkelement, wobei
das Netzwerk-Repository-Funktionsnetzwerkelement konfiguriert ist, um das Verfahren nach einem der Ansprüche 1 bis 9 durchzuführen; und
das Modellproduzenten-Netzwerkelement konfiguriert ist, um das Verfahren nach einem der Ansprüche 10 bis 13 durchzuführen.

15. Kommunikationseinrichtung, wobei die Einrichtung ein Modul umfasst, das konfiguriert ist, um das Verfahren als das Netzwerk-Repository-Funktionsnetzwerkelement nach einem der Ansprüche 1 bis 9 durchzuführen, oder ein Modul, das konfiguriert ist, um das Verfahren als das Modellproduzenten-Netzwerkelement nach einem der Ansprüche 10 bis 13 durchzuführen.

## Revendications

1. Procédé de communication, comprenant :
la réception, par un élément de réseau de fonction de référentiel de réseau, d'un premier message de requête provenant d'une première fonction de réseau, dans lequel le premier message de requête est utilisé pour demander l'autorisation à la première fonction de réseau d'obtenir un modèle ;
l'envoi, par l'élément de réseau de fonction de référentiel réseau, d'un second message de requête à un élément de réseau producteur de modèles sur la base du premier message de requête, dans lequel le second message de requête est utilisé pour déterminer s'il faut autoriser la première fonction de réseau à obtenir le modèle ;
la réception, par l'élément de réseau de fonction de référentiel réseau, d'un second message de réponse de l'élément de réseau producteur de modèles, et la génération d'un premier jeton d'accès sur la base du second message de réponse, dans lequel le second message de réponse indique que la première fonction de réseau est autorisée à obtenir le modèle, et le premier jeton d'accès indique que la première fonction de réseau est autorisée à obtenir le modèle ; et
l'envoi, par l'élément de réseau de fonction de référentiel réseau, d'un premier message de réponse à la première fonction de réseau, dans lequel le premier message de première réponse comprend le premier jeton d'accès.

2. Procédé selon la revendication 1, dans lequel le premier message de requête comprend un identifiant analytique, et l'identifiant analytique indique un type de modèle.

3. Procédé selon la revendication 2, dans lequel, avant l'envoi, par l'élément de réseau de fonction de référentiel réseau, du second message de requête à l'élément de réseau producteur de modèles sur la base du premier message de requête, le procédé comprend en outre :
la détermination, par l'élément de réseau de fonction de référentiel de réseau, de l'élément de réseau producteur de modèles sur la base de l'identifiant analytique et d'un identifiant analytique qui correspond à au moins un élément de réseau producteur de modèles et qui est stocké dans l'élément de réseau de fonction de référentiel de réseau.

4. Procédé selon la revendication 3, dans lequel la détermination, par l'élément de réseau de fonction de référentiel de réseau, de l'élément de réseau producteur de modèles sur la base de l'identifiant analytique et de l'identifiant analytique qui correspond à l'au moins un élément de réseau producteur de modèles et qui est stocké dans l'élément de réseau de fonction de référentiel de réseau comprend :
la détermination, par l'élément de réseau de fonction de référentiel réseau, de l'élément de réseau producteur de modèles sur la base de l'identifiant analytique, de l'identifiant analytique qui correspond à l'au moins un élément de réseau producteur de modèles et qui est stocké dans l'élément de réseau de fonction de référentiel réseau, d'un identifiant de fournisseur de la première fonction de réseau et d'un identifiant d'interopérabilité de l'au moins un élément de réseau producteur de modèles stocké dans l'élément de réseau de fonction de référentiel réseau, dans lequel l'identifiant d'interopérabilité de l'au moins un élément de réseau producteur de modèles indique un fournisseur d'une fonction de réseau qui est autorisé à obtenir un modèle auprès de l'au moins un élément de réseau producteur de modèles.

5. Procédé selon la revendication 4, dans lequel la détermination, par l'élément de réseau de fonction de référentiel réseau, de l'élément de réseau producteur de modèles sur la base de l'identifiant analytique, de l'identifiant analytique qui correspond à l'au moins un élément de réseau producteur de modèles et qui est stocké dans l'élément de réseau de fonction de référentiel réseau, de l'identifiant de fournisseur de la première fonction de réseau et de l'identifiant d'interopérabilité de l'au moins un élément de réseau producteur de modèles stocké dans l'élément de réseau de fonction de référentiel réseau comprend :
la détermination, par l'élément de réseau de la fonction de référentiel de réseau, d'au moins deux éléments de réseau producteurs de modèles candidats sur la base de l'identifiant analytique du premier message de requête et de l'identifiant analytique correspondant à l'au moins un élément de réseau producteur de modèles ; et
la détermination, par l'élément de réseau de fonction de référentiel de réseau, de l'élément de réseau producteur de modèles parmi les au moins deux éléments de réseau producteurs de modèles candidats sur la base de l'identifiant du fournisseur de la première fonction de réseau et de l'identifiant d'interopérabilité de l'au moins un élément de réseau producteur de modèles stocké dans l'élément de réseau de fonction de référentiel de réseau.

6. Procédé selon la revendication 3, dans lequel le premier message de requête comprend en outre un premier identifiant, et le premier identifiant indique un fournisseur d'un élément de réseau producteur de modèles correspondant à un modèle que la première fonction de réseau s'attend à obtenir ; et
la détermination, par l'élément de réseau de fonction de référentiel de réseau, de l'élément de réseau producteur de modèles sur la base de l'identifiant analytique et de l'identifiant analytique qui correspond à l'au moins un élément de réseau producteur de modèles et qui est stocké dans l'élément de réseau de fonction de référentiel de réseau comprend :
la détermination, par l'élément de réseau de fonction de référentiel réseau, de l'élément de réseau producteur de modèles sur la base de l'identifiant analytique, de l'identifiant analytique qui correspond à l'au moins un élément de réseau producteur de modèles et qui est stocké dans l'élément de réseau de fonction de référentiel réseau, d'un identifiant de fournisseur de la première fonction de réseau, d'un identifiant d'interopérabilité de l'au moins un élément de réseau producteur de modèles stocké dans l'élément de réseau de fonction de référentiel réseau, du premier identifiant et d'un identifiant de fournisseur de l'au moins un élément de réseau producteur de modèles stocké dans l'élément de réseau de fonction de référentiel réseau, dans lequel l'identifiant d'interopérabilité de l'au moins un élément de réseau producteur de modèles indique un fournisseur d'une fonction de réseau qui est autorisé à obtenir un modèle auprès de l'au moins un élément de réseau producteur de modèles.

7. Procédé selon l'une quelconque des revendications 1 à 6, dans lequel le second message de requête comprend au moins l'un des éléments suivants :
un identifiant analytique, et l'identifiant analytique indique un type de modèle ; ou
un identifiant de fournisseur de la première fonction de réseau et/ou un identifiant de la première fonction de réseau ; éventuellement,
dans lequel le second message de réponse comprend des informations d'identification du modèle.

8. Procédé selon l'une quelconque des revendications 7, dans lequel le second message de réponse comprend en outre un second jeton d'accès, le second jeton d'accès indique que la première fonction de réseau est autorisée à obtenir le modèle, et le second jeton d'accès comprend l'identifiant de la première fonction de réseau, un identifiant de l'élément de réseau producteur de modèles, et l'identifiant analytique et/ou les informations d'identification du modèle ; éventuellement,
le premier message de réponse comprend en outre le second jeton d'accès.

9. Procédé selon l'une quelconque des revendications 1 à 8, dans lequel le premier jeton d'accès comprend au moins l'un des éléments suivants :
un identifiant analytique, et l'identifiant analytique indique un type de modèle ; ou
un premier identifiant, et le premier identifiant indique le type de fournisseur d'un élément de réseau producteur de modèles d'un modèle que la première fonction de réseau est autorisée à obtenir ; ou
des informations d'identification du modèle.

10. Procédé de communication, comprenant :
la réception, par un élément de réseau producteur de modèles, d'un message de requête provenant d'un élément de réseau de fonction de référentiel de réseau, dans lequel le message de requête est utilisé pour demander de déterminer s'il faut autoriser une première fonction de réseau à obtenir un modèle ;
la détermination, par l'élément de réseau producteur de modèles sur la base du message de requête, d'autoriser la première fonction de réseau à obtenir le modèle ; et
l'envoi, par l'élément de réseau producteur de modèles, d'un message de réponse à l'élément de réseau de fonction de référentiel de réseau, dans lequel le message de réponse indique que la première fonction de réseau est autorisée à obtenir le modèle.

11. Procédé selon la revendication 10, dans lequel le message de requête comprend un identifiant analytique, un identifiant de fournisseur de la première fonction de réseau et un identifiant de la première fonction de réseau, et l'identifiant analytique indique un type de modèle.

12. Procédé selon la revendication 11, dans lequel la détermination, par l'élément de réseau producteur de modèles sur la base du message de requête, d'autoriser la première fonction de réseau à obtenir le modèle comprend :
la détermination, par l'élément de réseau producteur de modèles, des informations d'identification du modèle sur la base de l'identifiant analytique ; et
l'ajout, par l'élément de réseau producteur de modèles, des informations d'identification du modèle au message de réponse.

13. Procédé selon la revendication 11 ou 12, dans lequel la détermination, par l'élément de réseau producteur de modèles sur la base du message de requête, d'autoriser la première fonction de réseau à obtenir le modèle comprend :
la génération, par l'élément de réseau producteur de modèles, d'un second jeton d'accès, dans lequel le second jeton d'accès indique que la première fonction de réseau est autorisée à obtenir le modèle, et le second jeton d'accès comprend l'identifiant de la première fonction de réseau, un identifiant de l'élément de réseau producteur de modèles, et l'identifiant analytique et/ou les informations d'identification du modèle ; et
l'ajout, par l'élément de réseau producteur de modèles, du second jeton d'accès au message de réponse.

14. Système de communication, comprenant un élément de réseau de fonction de référentiel de réseau et un élément de réseau producteur de modèles, dans lequel
l'élément de réseau de fonction de référentiel de réseau est configuré pour réaliser le procédé selon l'une quelconque des revendications 1 à 9 ; et
l'élément de réseau producteur de modèles est configuré pour réaliser le procédé selon l'une quelconque des revendications 10 à 13.

15. Appareil de communication, dans lequel l'appareil comprend un module configuré pour réaliser le procédé en tant qu'élément de réseau de fonction de référentiel de réseau selon l'une quelconque des revendications 1 à 9, ou un module configuré pour réaliser le procédé en tant qu'élément de réseau producteur de modèles selon l'une quelconque des revendications 10 à 13.
